# EUROPEAN PATENT SPECIFICATION

(11) **EP 1 499 080 B1**
(45) Date of publication and mention of the grant of the patent: **22.10.2008**
(21) Application number: 04364050.7
(22) Date of filing: 15.07.2004
(51) Int. Cl.: H04L 12/64

(54) **Selection and setting up of a data stream connection through an intermediary device**
Auswahl und Aufbau einer Datenstromverbindung durch ein Zwischengerät
Sélection et établissement d'une connexion de flux de données par un dispositif intermédiaire

(30) Priority: 15.07.2003 FR 0308630
(43) Date of publication of application: 19.01.2005
(73) Proprietor: CANON KABUSHIKI KAISHA, Ohta-ku Tokyo 146-8501 (JP)
(72) Inventor: Bizet, Stéphane, 35700 Rennes (FR); Frouin, Laurent, 35700 Rennes (FR)
(74) Representative: Vidon, Patrice

(56) References cited:
- EP-A- 0 933 900
- WO-A-01/47240
- WO-A-03/045010

## Description

### BACKGROUND OF THE INVENTION

### 1. Field of the Invention

The field of the invention is that of communications networks enabling the interconnection of a plurality of apparatuses and especially, but not exclusively, home audiovisual networks used to interconnect analog and/or digital type audio and/or video devices so that they may exchange audiovisual signals.

The above-mentioned apparatuses (also called terminals) belong for example to the following list (which is not exhaustive): television receivers (using satellite, RF channels, cable, xDSL and other means), television sets, video-cassette recorders, scanners, digital video cameras, digital cameras, DVD readers, computers, personal digital assistants (PDAs), printers, etc.

The network comprises, for example, a backbone,network, for example a switched network or one or more digital buses of the IEEE 1394 type to which there are connected, through devices called "nodes", a plurality of sub-networks (for example digital buses of the IEEE 1394 type). The apparatuses (terminals) are connected to the sub-networks, by direct connection for the digital devices or by connection through an analog/digital converter for the analog devices.

It may be recalled that the IEEE 1394 standard is described in the following reference documents: "IEEE Std 1394-1995, Standard for High Performance Serial Bus" and "IEEE Std 1394a-2000, Standard for High Performance Serial Bus (Supplement)". The interconnection of digital buses by bridges is furthermore defined in the "IEEE P1394.1 Draft Standard for High Performance Serial Bus Bridges (Draft 1.04 October 24, 2002)".

More specifically, the invention relates to a method for setting up a data stream connection between a source terminal and a destination terminal, within a communications net. The invention also relates to a method for the selection and setting up of a connection of a data stream from amongst a plurality of a data streams originating in a plurality of source terminals.

It is indeed possible to distinguish between two categories of terminals (apparatuses):
- source terminals (also called "talkers" or again "sources") that generate data streams such as, for example, television receivers, video-cassette recorders, digital film cameras, digital cameras, DVD readers, computers, personal digital assistants etc.;
- destination terminals (also called "listeners") which process data streams (generated by the source terminals), such as, for example, television sets, computers, personal digital assistants (PDA), etc.;

Certain terminals may be of both types (source and destination) at once.

In general, the user of a destination terminal asks that a data stream connection should be set up between this destination terminal and a source terminal.

### 2. Description of the Prior Art

Referring now to the above-mentioned context of a communications network comprising a backbone network and a plurality of sub-networks, we shall now briefly present the current technique for setting up a stream connection, as well as the technique for selecting a stream from amongst a plurality of streams and for setting up a connection for the selected stream.

The term "source node" refers to a node whose associated sub-network is connected to at least one source terminal. The term "destination node" refers to a node whose associated sub-network is connected to at least one destination terminal. It is clear that, in practice, one and the same node can behave like a source node for a first stream and a destination node for a second stream. It must be noted that a source node can integrate a source terminal and that a destination note can integrate a destination terminal.

In general, a data stream connection between a destination terminal and a source terminal is set up via a source node and a destination node, and according to a particular protocol (for example a protocol compliant with the above-mentioned IEEE P1394.1 standard).

The current technique for setting up a stream connection between a destination terminal and a source terminal is not optimal. Indeed, if this connection proves to be impossible, for example because the destination node no longer has the necessary resources available for connection to the destination terminal, then a complete new procedure for setting up a connection has to be performed. This results in a loss of time for the user.

The current technique for selecting a stream from amongst a plurality of streams, and for setting up a connection for the selected stream, is not optimal either.

It may be recalled that this technique enables the user of a destination terminal to browse from one stream to another amongst the different data streams available within the network. In other words, connections are set up successively between a same destination terminal and different source terminals. To this end, the user makes use, for example, of a remote controller with which he sends browsing/selection commands to a node (typically the destination node) capable of setting up the successive connections requested.

Now, in its present implementation, this technique has the same major drawback as the present-day technique of setting up a stream connection on which it relies. Indeed; a new full procedure for setting up a connection must be made for each of the successive connections requested. Here again, this means a loss of time for the user when he wishes to scan the available data streams (namely the active source terminals) on the network.

Besides, European Patent Application EP 0 933 900 A2 relates to IEEE1394 bridging, for either asynchronous or isochronous transactions. It doesn't exactly match IEEE 1394.1 standard but main thought is very close to. In that sense, NEC document is describing some means that are used in the embodiment of the present invention (IEEE 1394.1 related). Oppositely to IEEE 1394.1 standard where stream connections are managed by bridge portals en route from a source to a destination, NEC patent discloses a method where stream connections are managed by terminal devices. NEC document describes embodiments where the stream connections are fully established. No partial stream connections are described.

PCT Application WO 01/47240 A2 deals with bandwidth adjustment for an isochronous data transfer across IEEE1394.1 type of bridges. It illustrates an isochronous stream connection setup between a source and a destination. It adds a description of overlaying a connection when a new destination (as known as listener) is being added to an already established stream. In that case, it only remains to create a stream connection between the destination and the last bridge en route from the source to the destination that is also part of the initial connection (i.e. with the other destination, already receiving the stream). However it means that the stream is already going through the said bridge. This document fails in teaching the setting up a partial connection, in the sense that an intermediary device between the source and the destination doesn't let through the stream to the destination device until a predetermined event is received.

### SUMMARY OF THE INVENTION

It is a goal of the invention especially to mitigate these different drawbacks of the prior art.

More specifically, one of the goals of the present invention is to provide a method for setting up a stream connection by which the user's waiting time can be restricted especially when the connection proves to be impossible at the first attempt.

It is also a goal of the invention to provide a method for the selection of a stream from amongst a plurality of streams, and for setting up a connection for the selected stream, by which it is possible to increase the speed at which the user of a destination terminal scans the available data streams.

It is another goal of the invention to provide methods such as these which, in the above-mentioned special context of a communications network comprising a backbone network and a plurality of sub-networks, can be implemented by the backbone network, and hence without necessitating any modification or adaptation of the source and destination terminals.

It is an additional goal of the invention to provide methods such as these that are easy to implement and simple to use.

These different goals, as well as others that should appear here below, are achieved according to the invention by means of a method for setting up a connection of data streams between a source terminal and a destination terminal connected to a communications network, wherein the method comprises the following steps:
- a partial connection of stream is set up between the source terminal and the destination terminal, through an intermediary device that is connected to the network, said connection being partial in that the intermediary device does not let through the stream to the destination terminal so long as a first predetermined event has not occurred;
- on the occurrence of said first predetermined event, the intermediary device lets through the stream to the destination terminal, so that a full connection of stream is set up between the source terminal and the destination terminal.

The general principle of this first method according to the invention therefore consists in setting up not a full connection directly (as is done in the prior art) but first of all a partial connection and then, if a first event occurs, a full connection. It is important to note that the partial connection is set up not between the source terminal and the intermediary device, but between the source terminal and the destination terminal (as in the case of the full connection). Indeed, the partial connection and the full connection are distinguished from each other solely in that, for the former (namely the partial) connection, the intermediary device does not let through the stream going toward the destination terminal whereas, for the latter connection (the full connection), it lets the stream through.

Thus, when a stream connection is set up, the waiting time for the user is restricted, especially when connection proves to be impossible at a first attempt. Indeed, since the connection proper is already set up, the passage from the partial connection to the full connection is far speedier then in the prior art solution in which the complete procedure for setting up connection is re-launched.

Various embodiments of this first method according to the invention can be envisaged, corresponding to various first events.

In a first advantageous embodiment, the first predetermined event is the reception by the intermediary device of a command, the transmission of which results from the use of command transmission means.

The command transmission means are used by a user or, automatically, by any unspecified piece of equipment.

This first embodiment can be applied especially in the second method according to the invention described here below, for the selection of the stream from amongst a plurality of streams, and for setting up a connection for the selected stream. The commands, whose reception constitutes the first predetermined event, are in this case commands for the selection of a stream from amongst a plurality of streams available on the network.

It must be noted that the user may request the transmission of a command for the selection of streams either deliberately (for example by pressing a "plus" key of a remote controller to go from a current stream to a next stream) or involuntarily (for example by pressing a "plus" key of a remote controller to go from a program conveyed by a current stream to a program conveyed by a next stream).

In a second advantageous embodiment, the first predetermined event is the release of sufficient resources in the intermediary device.

Advantageously, the method furthermore comprises a step for the release of the partial connection at the occurrence of a second predetermined event.

In this way, no partial connection is kept unnecessarily, and the use of the resources of the network is therefore limited.

Advantageously, the second predetermined event belongs to the group comprising:
- the validation of another complete stream connection, already set up between the source terminal and the destination terminal, through the intermediary device;
- the deactivation of the intermediary device.

In a particular embodiment of the invention, the network comprises a backbone network to which the following are connected: each through a source node ("multimedia interface device"), one or more sub-networks to which the source terminals are connected; through a destination node ("multimedia interface device"), the sub-network to which the destination terminal is connected. Furthermore, the intermediary device is indistinguishable from one of the nodes.

Preferably, the intermediary device is indistinguishable from the destination node.

The invention also relates to a method for the selection and setting up of a connection of a data stream from amongst a plurality of data streams originating in a plurality of source terminals, a destination terminal and the source terminals being connected to a communications network. This method comprises the following steps:
(a) a full connection is set up for a stream, known as a current stream, between one of the source terminals and the destination terminal through an intermediary device;
(b) a subset of selectable streams is determined as a function of the current stream, this subset comprising at least one stream that can be selected through means for sending selection commands;
(c) for each selectable stream, a partial connection of the stream is set up between the source terminal and the destination terminal, through the intermediary device, said connection being partial in that the intermediary device does not let through the stream to the destination terminal so long as the intermediary device has not received a command for the selection of said stream;
(d) at the reception of a command for the selection of a particular data stream, called a selected stream:
   - the intermediary device lets through the selected stream to the destination terminal, so that a full connection of the selected stream is set up between the source terminal generating the selected stream and the destination terminal, the selected stream becoming the new current stream;
   - the steps (b) and (c) are reiterated with the new current stream, with a view to a new iteration of the step (d).

The general principle of the second method according to the invention therefore consists in anticipating the user's decisions in setting up one or more partial connections that the user is likely to wish to view after the display of the current stream. The notions of partial connection and full connection have already been discussed here above, with reference to the first method according to the invention (on which the second method according to the invention is based).

Thus, the time for setting up a new stream connection is reduced, and the speed with which the user scans the available streams is therefore increased.

Advantageously, the subset of selectable streams comprises:
- at least one preceding stream (LEFT) that precedes the current stream according to a determined stream classification;
- at least one next stream (RIGHT) that follows the current stream according to the determined stream classification.

In a particular embodiment of the invention, the network comprises a backbone network to which the following are connected: each through a source node ("multimedia interface device"), one or more sub-networks to which the source terminals are connected; through a destination node ("multimedia interface device"), the sub-network to which the destination terminal is connected. Furthermore, the intermediary device is indistinguishable from one of the nodes.

Preferably, the intermediary device is indistinguishable from the destination node.

Advantageously, the preceding stream (LEFT) originates from a first source terminal which, firstly, is connected to the same sub-network as the source terminal generating the current stream and, secondly, precedes the source terminal generating the current stream according to a determined stream classification proper to said sub-network. Furthermore, the next stream (RIGHT) originates from a second source terminal which, firstly, is connected to the same sub-network as the source terminal generating the current stream and, secondly, follows the source terminal generating the current stream according to the determined stream classification proper to said sub-network.

According to an advantageous variant, the preceding stream (LEFT) originates from said first source terminal if it exists and, if not, from a source terminal which, firstly, is connected to a preceding sub-network that precedes the sub-network to which the source terminal generating the current stream is connected according to a determined classification of sub-networks proper to said preceding sub-network and secondly is the last stream according to a determined stream classification proper to said preceding sub-network. Furthermore, the next stream (RIGHT) originates from said second source terminal if it exists and, if not, from a source terminal which, firstly, is connected to a next sub-network that follows the sub-network to which the source terminal generating the current stream is connected according to a determined classification of sub-networks and, secondly, is the first stream according to a determined stream classification proper to said preceding sub-network.

Advantageously, the subset of selectable streams furthermore comprises:
- a "preceding sub-network" stream (DOWN), that originates from a source terminal which, firstly, is connected to a preceding sub-network which, according to a determined classification of sub-networks, precedes the sub-network to which the source terminal generating the current stream is connected and, secondly, is the last stream according to a determined classification proper to said preceding sub-network;
- a "next sub-network" stream (UP) that originates from a source terminal which, firstly, is connected to a next sub-network which, according to a determined classification of sub-networks, follows the sub-network to which the source terminal generating the current stream is connected and, secondly, is the first stream according to a determined stream classification proper to said preceding sub-network.

Preferably, the method furthermore comprises a step for the validation of the selected stream, after a full connection of said selected stream has been made.

Advantageously, the step for the validation of the selected stream is activated by an event belonging to the group comprising:
- the reception by the intermediary device of a validation command specific to said selected stream, the sending of which results from the use of said command transmission means;
- the expiry of a time delay activated beforehand by the reception of the selection command specific to a particular stream.

Preferably, said method furthermore comprises a step for the release of at least one partial connection, performed:
- subsequently to each iteration of the step (b) for determining a subset of selectable streams; and/or
- subsequently to each iteration of the step for the validation of the selection of a particular stream; and/or
- subsequently to a step for the deactivation of the intermediary device.

In an advantageous embodiment of the invention, for each selectable stream, the setting up of a partial connection of said selectable stream comprises the following steps:
(i) the intermediary device sends a stream connection request (I_REQ) to a first determined source node, said request defining at least one criterion for the choice of said selectable stream;
(ii) if, on its sub-network, the first source node has available a source terminal generating a stream meeting said at least one criterion of choice defined in the request, the first source node sends a positive acknowledgement message (I_ACK) to the intermediary device and the partial connection is set up;
(iii) if not, the first source node sends a negative acknowledgement message (I_ACK) and the steps (i) to (iii) are reiterated with the first source node but in modifying said at least one criterion of choice, or with another source node.

Advantageously, said request defines at least the following two criteria of choice:
- a stream identifier (STR_ID);
- a piece of information on a stream search direction (DIR) in a stream classification proper to the sub-network associated with the source node receiving the request.

Advantageously, the stream identifier (STR_ID) may take either a value that is valid or a value that is not valid, and the information on direction (DIR) may take one of the following values: " + ", "- and "= " so that:
- if the stream identifier (STR_ID) takes a valid value:
   - the value "= " of the piece of information on direction (DIR) indicates that the request relates to the stream identified by the stream identifier (STR_ID);
   - the value "+ " of the piece of information on direction (DIR) indicates that the request relates to the stream following the stream identified by the stream identifier (STR_ID), according to a stream classification proper to the sub-network associated with the source node receiving the request;
   - the value " - " of the piece of information on direction (DIR) indicates that the request relates to the stream preceding the stream identified by the stream identifier (STR_ID), according to the stream classification proper to the sub-network associated with the source node receiving the request;
- if the stream identifier (STR_ID) takes a non-valid value:
   - the value "= " of the piece of information on direction (DIR) is not used;
   - the value "+ " of the piece of information on direction (DIR) indicates that the request relates to the first stream according to the stream classification proper to the sub-network associated with the source node receiving the request;
   - the value "- " of the piece of information on direction (DIR) indicates that the request relates to the last stream according to the stream classification proper to the sub-network associated with the source node receiving the request.

According to an advantageous characteristic, for each partial connection of a selectable stream, the release of said partial connection comprises the following steps:
(1) the intermediary device sends a message requesting a stream release (I_REL) to the source node whose associated sub-network is connected to the source terminal generating said stream to be released, said release request message defining at least one criterion of choice (STR_ID) of the stream to be released;
(2) if the source node has a source terminal available at its sub-network, generating a stream meeting said at least one criterion of choice defined in the release request message, the source node sends a positive acknowledgement message (I_ACK) to the intermediary device and the partial connection is released;
(3) if not, the source node sends a negative acquittal message (I_ACK) to the intermediary device and the steps (1) to (3) are reiterated with the same source node, but in modifying said at least one criterion of choice of the stream to be released, or with another source node.

The invention also relates to a computer program comprising program code instructions for the execution of the steps of the above-mentioned method, when said program is executed on a computer.

The invention also relates to an intermediary device used in the implementation of the method for setting up a data stream connection between a source terminal and a destination terminal connected to a communications network. This intermediary device comprises:
- means making it possible not to allow the passage, to the destination terminal, of a stream for which a connection has been set up between the source terminal and the destination terminal through the intermediary device, so long as a predetermined first event has not occurred, said connection being called a partial connection so long as the predetermined first event has not occurred;
- means to detect the occurrence of said predetermined first event, enabling the deactivation of said means that make it possible not to allow the stream to pass through to the destination terminal, so that a full stream connection is set up between the source terminal and the destination terminal after the occurrence of said predetermined first event has been detected.

The invention also relates to an intermediary device used in the implementation of a method for the selection and setting up of the connection of a data stream from amongst a plurality of data streams originating in a plurality of source terminals, a destination terminal and the source terminals being connected to a communications network, a full connection of a stream, called the current stream being set up between one of the source terminals and the destination terminal, through the intermediary device. This intermediary device comprises:
- means for obtaining a subset of selectable streams as a function of the current stream, comprising at least one stream capable of being selected through means for the transmission of selection commands;
- for each selectable stream for which a connection has been set up between the source terminal and the destination terminal through the intermediary device, means that make it possible not to allow the passage of the stream toward the destination terminal so long as a predetermined first event has not occurred, said connection being called a partial connection so long as the intermediary device has not received a command for the selection of said stream;
- means for the reception of a command for the selection of a particular data stream, called a selected stream, making it possible, when they receive a selection command, to:
   - deactivate the means making it possible not to allow the selected stream to pass to the destination terminal, so that a complete connection of the selected stream is set up between the source terminal generating the selected stream and the destination terminal, the selected stream becoming the new current stream;
   - again activating the means for obtaining a subset of selectable streams and means making it possible not to allow the passage of the stream, for each selectable stream, with a view to a new reception of a selection command by said reception means.

### BRIEF DESCRIPTION OF THE DRAWINGS

Other features and advantages of the invention shall appear from the following description of a preferred embodiment of the invention, given by way of an indication that in no way restricts the scope of the invention, and from the appended drawings, of which:
Figure 1 shows a home network in which it is possible to implement the method according to the invention for the selection of the stream from amongst a plurality of streams, and for setting up a connection for the selected stream;
Figure 2 is a block diagram of an audio/video interface module included in a multimedia interface device (node) appearing in figure 1;
Figure 3a shows a remote-control pack used inside the home network of figure 1, with reference to a multimedia interface device (node);
Figure 3b shows a view in perspective of the front phase of a multimedia interface device (node) seen in figure 1;
Figure 4, which is formed by figures 4a and 4b, represents the algorithm for setting up a stream connection according to the invention, executed by a multimedia interface device (source node) to which a source terminal is connected;
Figures 5a, 5b and 5c respectively show a stream connection request message, an acknowledgement of reception message and a stream release request message;
Figure 6 shows a stream connection release algorithm according to the invention, executed by a multimedia interface device (source node) to which a source terminal is connected;
Figure 7a shows a stream control table managed by multimedia interface device (the destination node forming the intermediary device) to which a destination terminal is connected;
Figure 7b shows a stream control table managed by a multimedia interface device (source node) to which a source terminal is connected;
Figure 8, which consists of figures 8a, 8b, 8c and 8d, shows stream connection management algorithm according to the invention, executed by a multimedia interface device (the destination node forming the intermediary device) to which a destination terminal is connected;
Figure 9 shows the general algorithm of the method according to the invention for the selection of the stream from a plurality of streams, and for setting up a connection for the selected stream.

### MORE DETAILED DESCRIPTION

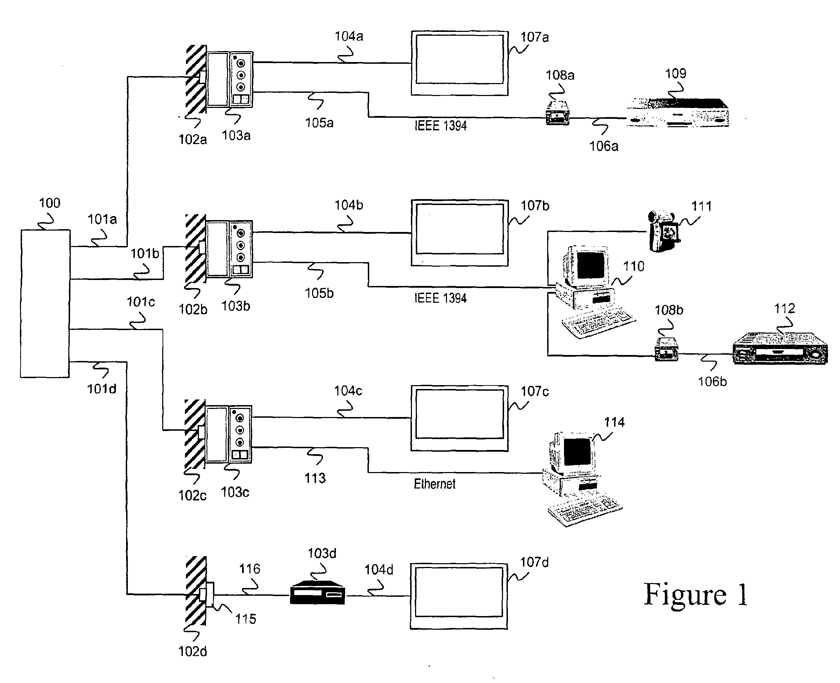

**Figure 1** shows a multimedia communications network in which it is possible to implement the method according to the invention for the selection of the stream from a plurality of streams, and for setting up a connection for the selected stream. This network is installed for example in a home environment.

The network interconnects devices such as television sets referenced 107a, 107b, 107c and 107d, a DVD TypeReader referenced 109, a video-cassette recorder referenced 112, computer type equipment referenced 110 and 114, as well as a digital camcorder referenced 111.

This network has multimedia interface devices referenced 103a, 103b, 103c and 103d (also called nodes hereinafter in the description). The multimedia interface devices referenced 103a, 103b, 103c are full example built into the partition walls 102a, 102b and 102c of the rooms of the dwelling. The multimedia interface device referenced 130d is not built into the partition wall but is connected through a link 116 to the connector referenced 115. These multimedia interface devices are connected to a central switching unit 100 preferably placed beside the electrical power supply panel through links referenced 101a, 101b, 101c, 101d and 116. These links are, for example, of the UTP5 ("Unshielded Twisted Pair, category 5) type as specified in the ANSI/TIA/EIA/568A standard) classically used in Ethernet type networks, and the connector referenced 115 is of the RJ45 type. It must be noted that other types of links could be used, such as optic fiber links or IEEE 1355 compliant cables.

Each of the multimedia interface devices comprises at least connection means of the Ethernet or IEEE1394 type and an analog video output. All the information obtained by the connection means will be distributed to other remote multimedia interface devices through the central switching unit and links connecting this unit to the different multimedia interface devices.

Thus the multimedia interface device is referenced 103a, 103b, 103c and 103d, the links referenced 101a, 101b, 101c, 101d and 116 and the central switching unit 100 together form a backbone network, also called a "home network backbone" here below in the description.

The television set 107a is connected by means of an analog video link 104a to the multimedia interface device 103a. According to one variant, the link 104a may be compliant with the IEEE 1394 standard and the television set then comprises an IEEE 1394 board. Similarly the television sets 107b, 107c and 107d are respectively connected to the multimedia interface devices 130b, 103c and 103d by means of video/analog links 104b, 104c and 104d.

The DVD reader referenced 109 is connected by means of an analog link 106a to an analog-digital converter referenced 108a. This converter is itself connected by an IEEE 1394 compliant digital link 105a to the multimedia interface device 103a. This converter converts the video/analog information generated by the DVD reader into a format compatible with the IEEE 1394 standard.

The computer 110, the camcorder 111 and the analog-digital converter 108b are connected to one another and with the multimedia interface apparatus 103b by means of an IEEE 1394 compliant digital link 105b. The analog-digital converter 108b is itself connected to the analog video-cassette recorder 112 by means of the link 106b.

The computer referenced 114 is connected by means of an Ethernet type link referenced 113 to the multimedia interface device 103c.

The different AV sources (also called source terminals) can be accessed from any room, using destination terminals (for example television sets 107x, with x = a, b, c or d). The user makes use of a remote controller placed at his disposal to send infrared commands to one of the multimedia interface devices 103x, with x = a, b, c or d. These commands are interpreted to set up connections between the source terminals and the destination terminals.

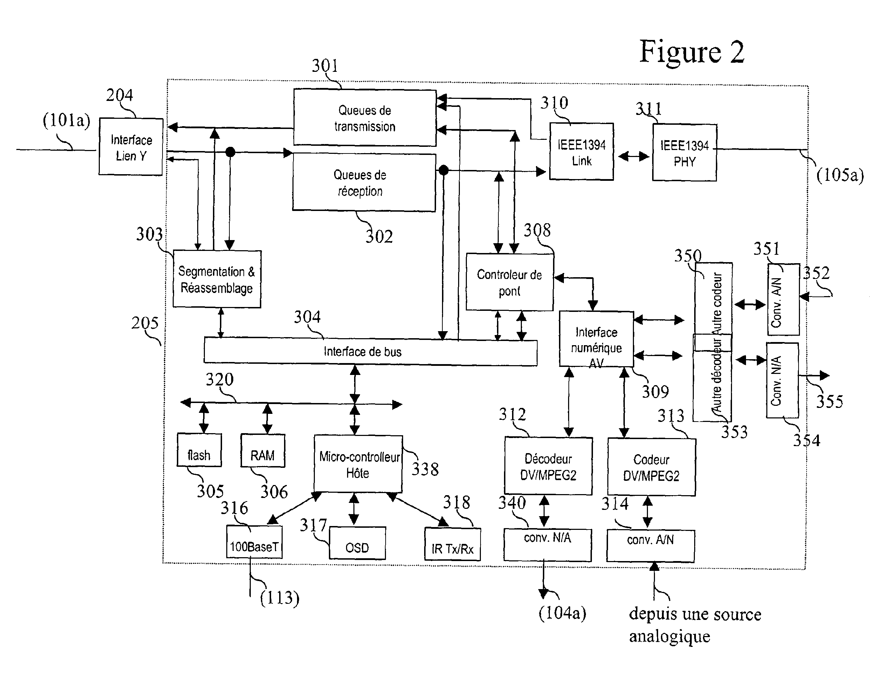

**Figure 2** shows a block diagram of an audio/video interface module 205 included in the multimedia interface devices (node) referenced 103x, with x = a, b, c or d, in figure 1.

In general, an audio/video interface module 205 possesses a plurality of connection means by which signals of different kinds will be processed. The data coming from these connection means will be mixed together so as to form only one data stream compliant with a given protocol that is forwarded by means of the Y-Link interface 204 on the single medium which, in this case, is a CAT5 cable.

This audio/video interface 205 will also manage the quality of service constraints associated with its different signals.

The audio/video interface comprises a microcontroller 338 that will transfer data on the bus 320 to RAM (Random Access Memory) type storage means 306, more particularly when the data comes for example from the link 101a.

When the multimedia interface device is powered on, the microcontroller 338 will load the program contained in the Flash Memory 305 in the RAM 306 and execute the code associated with this program.

The microcontroller 338 will transfer the information coming from the different connection means to a transmission queue referenced 301. This information will be transferred to the transmission queue of 301 in accordance with the quality of service required for the conveyance of this information. Indeed, the IEEE 1394 type networks enable the exchange of isochronous or asynchronous type data. The data, in this case of the isochronous type, is governed by transmission bit rate imperatives while asynchronous type data can be transmitted without transmission bit rate imperatives.

The data transfer according to a quality of service is described in the European patent application No. 01400316. We shall not describe it in fuller detail.

The microcontroller 338 has a 100baseT type Ethernet interface 316 connected to it, enabling the connection of a cable like the one referenced 113.

A character generator or "on-screen display" unit 317 is also connected to the microcontroller 338. This character generator 317 will enable the insertion of information into the video signal transmitted on the link 105a for example.

An infrared transmission and reception module 318 is also connected to the microcontroller 338. Through this infrared module 318, infrared command signals coming from a remote controller will be retransmitted by means of the microcontroller 338 to the different devices connected to the network. This transfer of infrared commands is described in the French patent application number FR 0110367.

It must be noted that, in one variant, the infrared module is preferably a one-way module.

Through the bus interface 304, the microcontroller 338 will also manage the configuration of the transmission parameters associated with each transmission queue, these parameters being stored in the segmentation and re-assembly module 303.

For the transmission queues associated with an isochronous type data stream (these queues are known as "stream mode buffers"), the segmentation and re-assembly module 303 guarantees the minimum transmission bit rate necessary for the isochronous type data stream on the basis of the transmission parameters.

For the transmission queues associated with an asynchronous type data stream (these queues are known as "message mode buffers"), the segmentation and re-assembly module 303 ensures a maximum bit rate for the asynchronous type data stream on the basis of the transmission parameters.

The transmission parameters associated with each buffer are computed by the microcontroller:
- as a function of a passband reservation in the network for "stream mode buffer" type queues;
- locally as a function of an estimation of the passband available in the network for "message mode buffer" type queues.

The transfer data according to these two modes of transmission is described in the European patent application number 01400316 and shall not be described more fully.

This data comes:
- either from the devices connected to the IEEE 1394 links such for example the 105a link,
- of from an analog device (such as for example a VHS type of the video cassettes recorder) connected to the analog/digital converter 314,
- or from a micro-computer type device connected to the Ethernet interface 316.

Should the analog data come, for example, from a video-cassette recorder 112 directly connected to the multimedia interface, this data will be converted by the analog/digital converter 314 and then encoded in an MPEG2 or DV type format by the module 313. This encoded data will then be forwarded by means of the digital audio/video interface 309 and the bridge controller 308 to the transmission queue 301. DV is a shortened form of the SD-DVCR ("Standard Definition Digital Video-Cassette Recorder ") format. MPEG2 is an acronym for "Motion Picture Expert Group 2". It must be noted that the analog/digital converter 108b shown in figure 1 is herein integrated into the multimedia interface device 103b.

For data other than MPEG2 or DV type data (for example in a proprietary format), another encoder 350 and another analog/digital converter 351 are planned. Their role is directly deduced from the elements referenced 353 and 355 described here above.

Should the data come from a device connected to an IEEE 1394 link such as, for example, the link 105a, two types of processing will be performed depending on the nature of the data. If this data is asynchronous type data, it will travel through the bus interface 304 and be stored in the memory 306. The microcontroller 338 transfers this data to a transmission queue 301 (of the "message mode buffer" type). If it is isochronous type data, the data will travel directly to a "stream mode buffer" type of transmission queue 301.

The microcontroller 338 will also use the bus interface 304 to manage the distribution of the data received by means of the Y link 204 and stored in the reception queue 302.

For the isochronous type data, and depending on the destination of this data, the microcontroller 338 will activate the transfer of the data either towards the controller of the IEEE 1394 link referenced 310, if this data is intended for at least one of the terminals connected to the bus 105a for example, or towards the bridge controller 308, if it is intended for a terminal connected to the link 104a for example.

For asynchronous type data, the microcontroller 338 will activate the transfer of the data to the RAM 306 through the bus interface 304. The Ethernet type asynchronous data will then be sent to the interface 316.

The IEEE 1394 type asynchronous data will then be sent to the interface referenced 311.

If the data is intended for a terminal connected to the link 104a for example, the microcontroller 338 will activate the transfer of this data to the digital audio/video interface 309 by means of the bridge controller 308. This MPEG2 or DV type data will then be decoded by the decoder 312 and finally forwarded to the digital/analog converter 340, which enables the transfer of the information into analog form, for example, to the television set 107a by means of the link 104a.

For data other than MPEG2 or DV type data (for example in a proprietary format), another decoder 353 and another digital/analog converter 354 are planned. Their role is directly deduced from the elements referenced 312 and 340 described here above.

The segmentation and re-assembly module 303 controls the transmission of the data in packet form from the transmission queues to the Y link interface 204. Each packet has a routing header as well as a packet type header (of the "message" or "stream" type depending on the transmission queue). The information on routing and type of packet are configured by the microcontroller 338.

Furthermore, the segmentation and re-assembly module 303 controls the reception of the packets from the Y link interface 204 in order to store the data as a function of the type of packet in the appropriate reception queue, which is either of the "message mode buffer" type or of the "stream mode buffer" type.

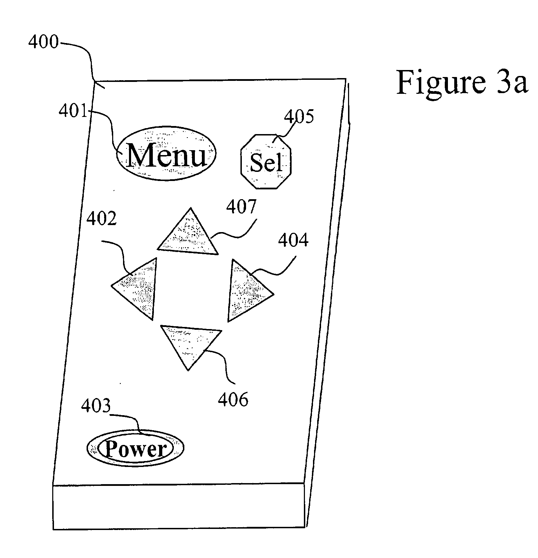

Referring now to **figure 3a****,** a description is given of a remote controller 400 used within the home network of figure 1, in relation with a multimedia interface device (destination node), constituting an intermediary device according to the mention.

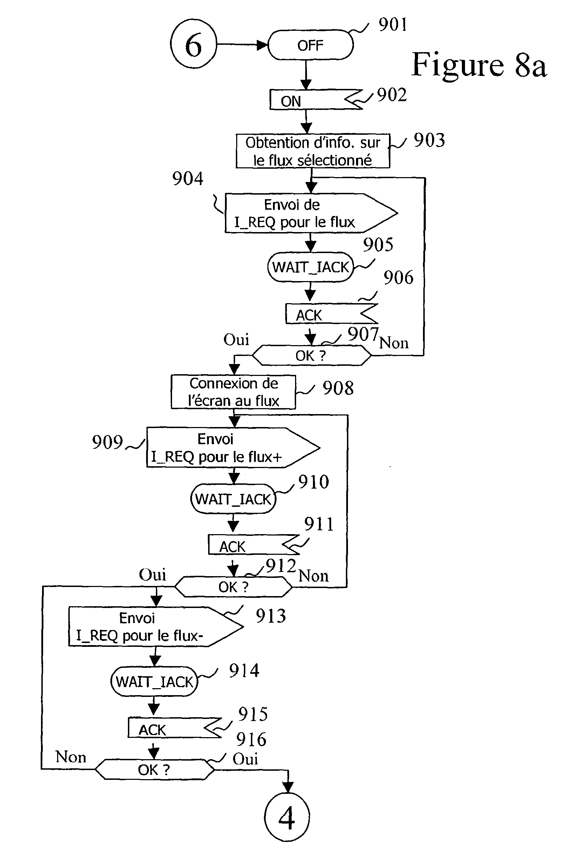

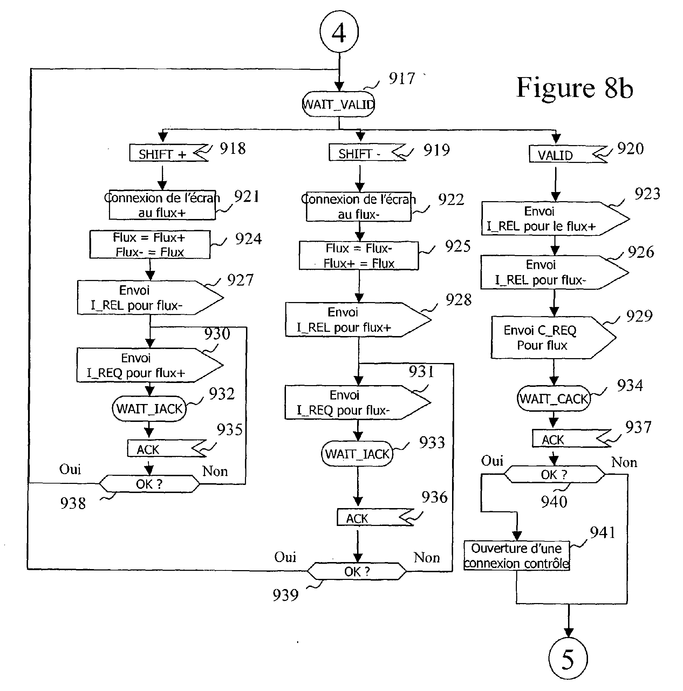

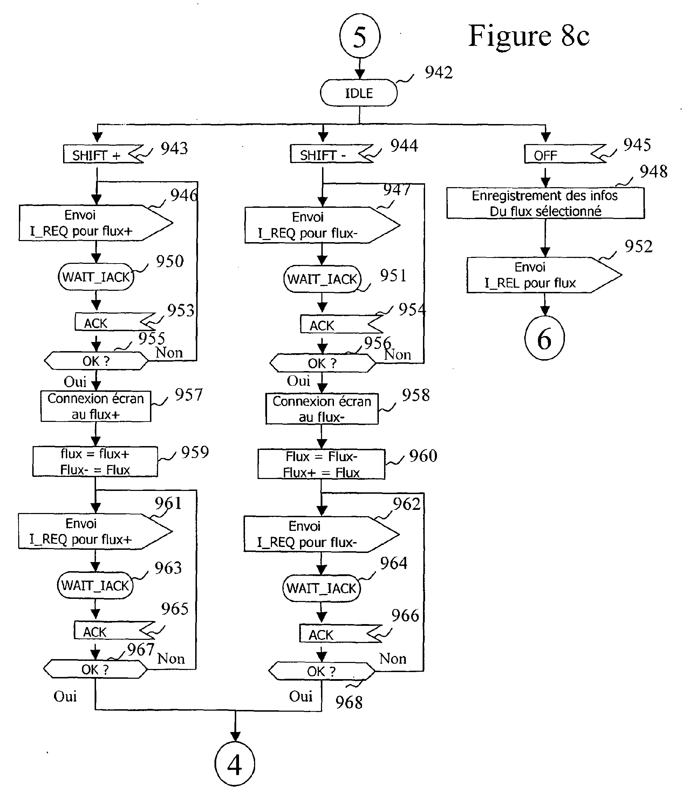

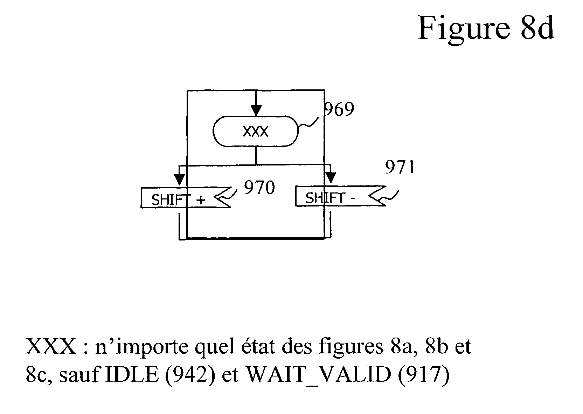

The remote controller 400 comprises means (not shown) for sending infrared (IR) signals, as well as different keys and especially:
- a key "RIGHT" 404 (and "LEFT" 402 respectively), which, when pressed, generates a command IR enabling the intermediary device to select a next stream (and preceding stream respectively), relative to a current stream, within a subset of selectable streams. In other words, these keys 402, 404 enable the user to go from a next or preceding source terminal amongst the source terminals connected to a given IEEE 1394 bus, itself connected to the network via a multimedia interface device (source node). When all the streams of the source terminals present at the IEEE 1394 bus have been scanned, additional pressure on the keys 404 or 402 enables the user to pass to a stream of the source terminal of the next or preceding IEEE 1394 bus respectively;
- an "UP" key 407 (and "DOWN" key 406 respectively ) which, when pressed, generates an IR command by which the intermediary device can directly select streams generated by source terminals located in rooms (since there is preferably one serial bus per room containing AV devices) other than the one from which the current stream (i.e. contents that the user is viewing) comes. Pressing the keys "RIGHT", "LEFT", "UP" or "DOWN" a first time gives rise to an IR command enabling the multimedia interface device to start the algorithm of the method according to the invention described here below with reference to figure 8;
- a "Menu" key 401, which, when pressed, gives rise to an IR command enabling the user to access advanced functions through a network management menu. This key 401 can also be used to stop the algorithm of the method according to the invention;
- a "Sel" key 405 which, when pressed, gives rise to an IR command enabling the multimedia interface device to validate a current stream (for which a full connection between the source terminal and the destination terminal has been set up through the multimedia interface device);
- a "Power" key 403 which, when pressed, generates an IR command enabling the activation (and respectively the deactivation) of the multimedia interface device if it is deactivated (and activated respectively).

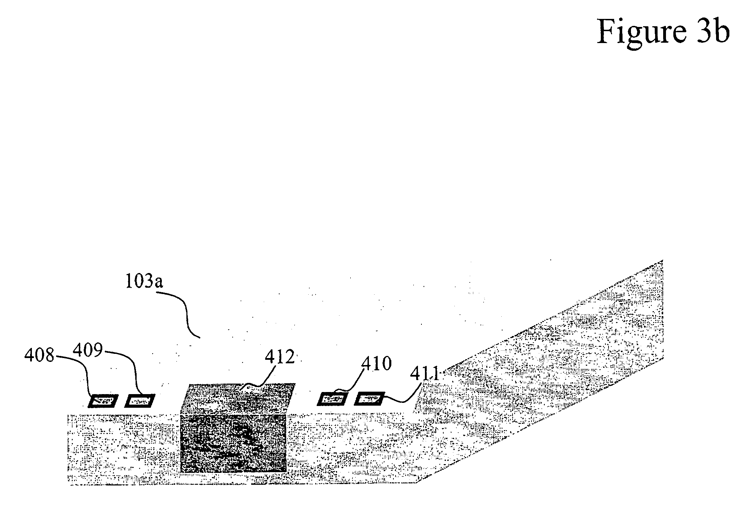

**Figure 3b** is a view in perspective of the front face of the multimedia interface device (node) seen in figure 1 (for example the one referenced 103a).

This multimedia interface device gives connectivity (IEEE 1394 ports, Ethernet, analog RCA connectors, etc.) to connect AV and PC equipment to the home network. It also contains the window for the reception of infrared (IR) signals 412 for the use of the remote controller described here below with reference to figure 3a.

Optionally, this multimedia interface device furthermore comprises a set of buttons to enable direct zapping using the front face of the multimedia interface device instead of through a remote controller. The buttons referenced 408, 409, 410 and 411 execute the same commands as the remote control keys referenced 402, 404, 406 and 407 respectively in figure 3a. The hardware modules that manage the setting of the buttons 408, 409, 410 and 411 of the multimedia interface device are not shown in figure 2 in order to simplify the schematic representation of this multimedia interface device.

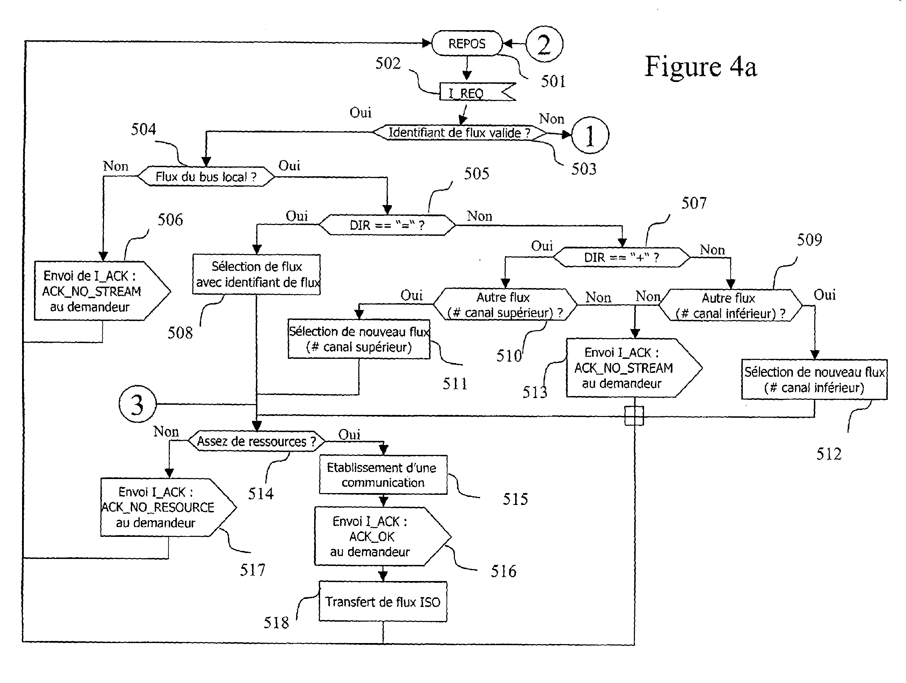

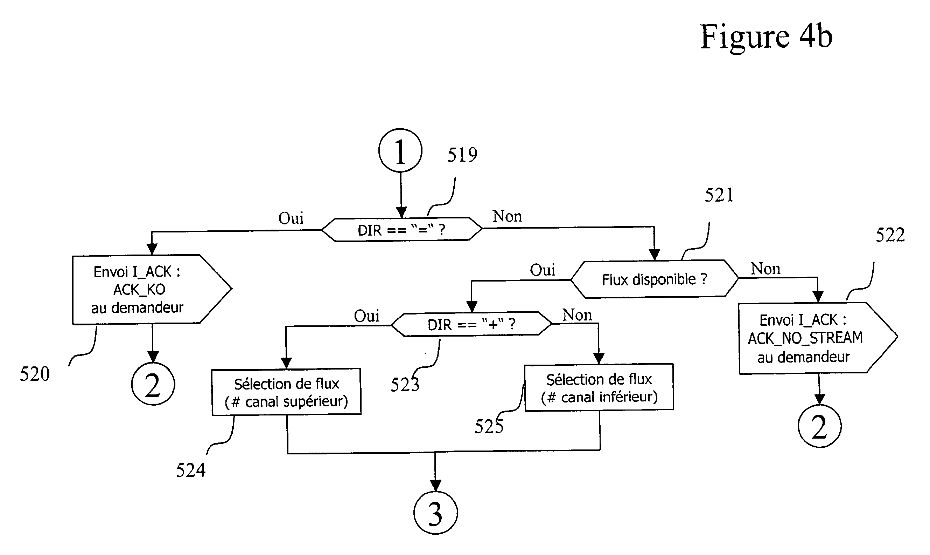

**Figure 4** is made up of figures 4a and 4b. It represents the algorithm for setting up a stream connection according to the invention, executed by a multimedia interface device (source node) to which a source terminal is connected.

An example shall now be taken of a conventional situation, in using the home network described in figure 1. The user makes use of the television set 107d connected to the multimedia interface device 103d and sends commands to the multimedia interface device 103d using the remote controller 400. Once the multimedia interface device 103d and the television set 107d have been activated, an AV stream is displayed on the television set 107d, as described in the figure 8, unless no AV source is available within the home network. In this case, a user interface and menu may be automatically presented on the television set by means of the OSD (on-screen display) module 317.

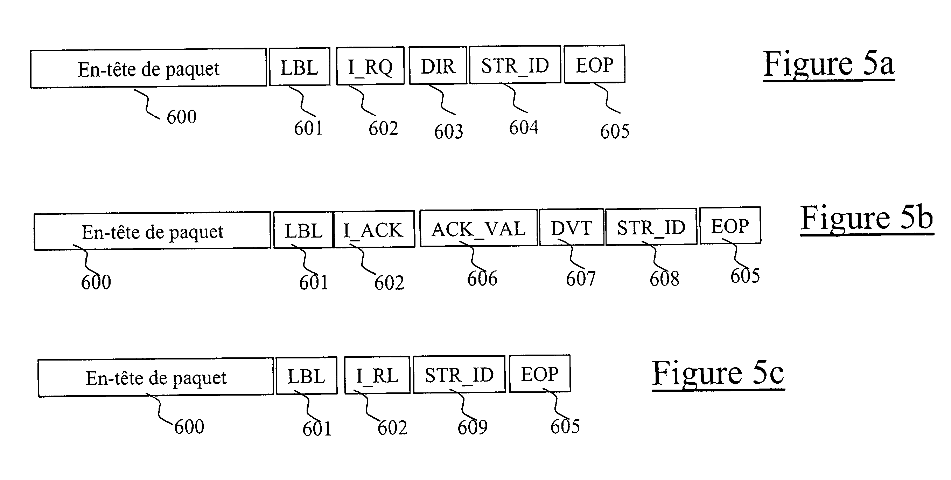

When the user wishes to view an AV source with the television set 107d, he uses the remote controller 400 to browse within a network management menu ("MENU" key) displayed on the television set or, if no menu is displayed on the television set, he uses his remote controller 400 to scan all the AV sources connected to the home network. The multimedia interface device 103d then interprets the commands sent by the user and makes one or more stream connections. The procedure for setting up a stream connection requires a communications protocol between the multimedia interface device 103d and the other multimedia interface devices of the network 103a, 103b and 103c. The messages used are described here below with reference to figures 5a, 5b and 5c.

Figure 4 describes the algorithm executed by the multimedia interface devices 103a, 103b and 103c when they participate in the procedure for setting up a stream connection with the multimedia interface device 103d. In order that the user may see a set of audio/video contents generated by a source terminal connected to the multimedia interface device 103b (source node), this multimedia interface device must receive a message I_REQ (a request for isochronous connection) at the step 502 coming from the multimedia interface device 103d which asks for a connection. The multimedia interface device 103b then analyses the message I_REQ received to ascertain that it contains a valid stream identifier. A non-valid stream identifier is a predetermined number that specifies no stream. Taking account of the preliminary draft standard P1394.1 "High-performance serial bus bridges" D1.04 dated 24 Oct 2002, the stream identifier is defined as a combination of the EUI64 identifier of the source terminal and the index of the OPCR (output plug control register as defined under the IEC 61883 standards) used by the source terminal to forward the stream. A EUI64 identifier that is never assigned is therefore sufficient to define a non-valid stream identifier.

If the I_REQ message contains a valid stream identifier (with an affirmative response at the step 503), the multimedia interface device 103b ascertains (in the step 504) that it relates to a stream available on its local bus. If this is not the case, it sends the multimedia interface device 103d a message I_ACK (acknowledgement of reception of isochronous connection) indicating that the requested stream is unknown (step 506). If not (step 505), it checks the value DIR (direction) of the message I_REQ. If the value DIR corresponds to "= ", the multimedia interface device 103d requests that a connection should be set up for the stream identified by the stream identifier of the message I_REQ. At the step 508, the multimedia interface device 103b selects the stream concerned and, at the step 514, it ascertains that there are sufficient resources available to set up the connection (namely, resources of the network, internal resources of the multimedia interface device 103b (bridge) and resources of the local bus). If there are no sufficient resources, the multimedia interface device 103b (source node) sends a message I_ACK back to the multimedia interface device 103d (destination node and intermediary device) indicating the lack of resources (step 517). If not, it sets up a connection on the home network from its local bus toward the multimedia interface device 103d (step 515), sends the multimedia interface device 103d a message I_ACK indicating that the connection request has been made (step 516) and configures its transmission mechanisms to launch the transfer of the stream (step 518).

If the value DIR corresponds to "+" (affirmative response at the step 507), the multimedia interface device 103d requests that a connection should be set up for the available stream following the one identified by the stream identifier of the message I_REQ. It is up to the multimedia interface device 103b to implement the stream classification method (see discussion here below). The multimedia interface device 103b then verifies (step 510) that such a stream is available in its list of streams of the local bus. If there are no longer any stream available, then, at the step 513, it sends a message I_ACK back to the multimedia interface device 103d, indicating that the requested stream connection cannot be set up. If not, it selects the next available stream (step 511) and verifies the availability of the resources (step 514).

If the value DIR corresponds to "-" (with a negative response at the step 507), the multimedia interface device 103d requests that a connection should be set up for the available stream preceding the one identified by the stream identifier of the message I_REQ. The multimedia interface device 103b then ascertains (in the step 509) that a stream of this kind is available in its list of streams of the local bus. If there no longer remains any stream available, then at the step 513, it sends a message I_ACK back to the multimedia interface device 103d, indicating that the requested stream connection cannot be set up. If not, it selects the preceding available stream (step 512) and verifies the availability of the resources (step 514).

If the message I_REQ contains a non-valid stream identifier (pre-determined value) (with a negative response at the step 503), the multimedia interface device 103b checks (step 519) the value DIR of the message I_REQ. If the value DIR corresponds to " = ", it is impossible to select a stream. Hence, at the step 520, it sends a message I_ACK back to the multimedia interface device 103d indicating that the requested stream connection cannot be set up. If the value DIR does not correspond to "= ", the multimedia interface device 103b ascertains (in the step 521) that there is a stream available on its bus local. If no stream is available, at the step 522, it indicates the situation in the message I_ACK sent back to the multimedia interface device 103d. If a stream is available on its local bus, it selects (step 524) the first element in the list of the available streams if the value DIR corresponds to "+" (affirmative response at the step 523). If not (namely if the value DIR corresponds to "- "), it selects the last element of the list of available streams (step 525). The algorithm then goes to the step 514 to verify the resources, as already described here above.

In any case, when the multimedia interface device 103b sends a message I_ACK indicating that the connection request has been carried out (ACK_OK), the field STR_ID contained in this message contains the identifier of the streams set up.

As can be seen in the above description, the way in which the sources (or source terminals) are classified on a bus depends on the multimedia interface device that places these sources in interface with the home network backbone. Several modes of implementation are possible: the multimedia interface device may manage a list of sources as a function of their EUI64 identifier (a 64-bit word providing a unique identification of a device recorded in the configuration ROM for IEEE 1394 devices), in the chronological order of their connection to the local bus of the multimedia interface device, as a function of the isochronous channel that they use on the local bus to forward the AV streams, etc. Preferably, the solutions selected are ones that have no impact on such a classification when a bus reset takes place on the local bus of the multimedia interface device. Such solutions are preferably selected in order to maintain consistency at the level of the remote user (who cannot know what is happening in a room other than the one in which he is located).

**Figures 5a, 5b and 5c** show the messages used for the stream connection procedures. Figure 5a shows the message I_REQ, used to request a stream connection. Figure 5c shows the message I_REL, used to request the release of a stream connection. Figure 5b shows the message I_ACK, used to acknowledge reception of a message I_REQ or I_REL.

The packet header field 600 contains information on the routing from the multimedia interface device that sends the message up to the one that receives it, as well as information on the identification of the sender multimedia interface device and on the communications channel used.

The field LBL 601 is a labeling means. A message I_ACK in response to a message I_REQ or I_REL must have a field LBL identical to the field LBL of the message I_REQ or I_REL referred to. This field is used to retrieve the I_REQ/I_REL concerned by a received I_ACK.

The message field 602 may be set at the value I_REQ, I_REL or I_ACK. This field specifies the type of message: I_REQ is used to request the setting up of a stream connection; I_ACK is used to acknowledge reception of a request for setting up or releasing a stream connection; I_REL is used to request the release of the stream connection.

The field DIR 603 indicates a direction (" = ", " + ", or "- ") and its use has already been described here above, with reference to figure 4.

The fields STR_ID 604, 608 and 609 specify the stream identifier, namely the value that identifies a stream uniquely in a home network. An exemplary construction of a stream identifier as a function of the combination of the EUI64 identifier of the source terminal and the index of its OPCR used to send the AV stream on the local bus of the source terminal is defined in the preliminary draft standard P1394.1 "High-performance serial bus bridges" D1.04 dated 24 Oct 2002. The field STR_ID can also be set at a non-valid stream identifier value, namely a predetermined value used to set this field STR_ID as being undefined. In a message I_REQ, the field STR_ID 604 is significant as a function of the field DIR 603. When the field DIR is set at "= ", the field STR_ID indicates the identifier of the stream to be propagated on the home network backbone. If it is set at the predetermined value of a non-valid stream identifier, the message_REQ has not been properly built by the sender of the message and a message I_ACK indicating the result ACK_KO must be sent back to the sender of I_REQ by the receiver of I_REQ, as described in figure 4. When the field DIR is set at "+", the field STR_ID indicates the identifier of the stream just before the stream to be propagated on the home network backbone in the list of the available streams managed by the receiver I_REQ. When the field DIR is set at "+", the field STR_ID can also be set at a predetermined value of a non-valid stream identifier. In this case, the receiver of the message I_REQ must process the connection configuration for the first source in its list of available sources on its local bus. When the field DIR is set at "- ", the field STR_ID indicates the identifier of the stream just after the stream to be propagated on the home network backbone in the list of available streams managed by the receiver of I_REQ. When the field DIR is set at "- ", the field STR_ID can also be set at the predetermined non-valid stream identifier value. In this case, the receiver of the message I_REQ must process the configuration of the connection for the last source in its list of sources available at its local bus.

In the message I_ACK the field STR_ID 608 contains the identifier of the stream that has been set up following a stream set-up request I_REQ.

The field EOP 605 indicates the end of the packet or of the message.

The field ACK_VAL 606 indicates the results of the request referred to by the message I_ACK. This field may be set at ACK_OK, ACK_KO, ACK_NO_STREAM or ACK_NO_RESOURCE. When the result ACK_OK is indicated in a message I_ACK, the request to which it refers has been successfully executed. When the result ACK_NO_RESOURCE is indicated in an I_ACK message, the request to which it refers has not been executed for lack of resources. When the result ACK_NO_STREAM is indicated in a message I_ACK, the request to which it refers has not been executed for lack of stream availability. When the result ACK_KO is indicated in a message I_ACK, the request that it refers to has not been executed for a reason other than lack of resources or lack of stream availability.

The field DVT 607 indicates the type of stream for which the setting up of a connection (or possibly the release of a connection) is the subject of an acknowledgement of reception with the message I_ACK. This field has no significance if the value of the field ACK_VAL is different from ACK_OK.

It must be noted that such a field DVT may be present in the field I_REQ for a variant of the invention in which the sender of the message I_REQ specifies the type of stream that he requests: DV, MPEG2, etc. This field is therefore analyzed as a complement to the field DIR, and then the message I_REQ is analyzed as follows: when the field DIR is set at "=", the field STR_ID indicates the identifier of the stream to be propagated on the home network backbone, which must be of the type defined by the field DVT so that the configuration of the connection is successful. When the field DIR is set at "+ ", the field STR_ID indicates the identifier of the stream just before the stream to be propagated on the home network backbone in the list of the available streams of the type defined by the field DVT managed by the receiver I_REQ. When the field DIR is set at "+", the field STR_ID may be set at the predetermined value of a non-valid stream identifier. In this case, the receiver of the message I_REQ must process the configuration of the connection for the first source of the type defined by the field DVT in its list of the available sources on its local bus. When the field DIR is set at "- ", the field STR_ID indicates the identifier of the stream just after the stream to be propagated on the home network backbone in the list of available streams of the type defined by the field DVT managed by the receiver I_REQ. When the field DIR is set at "- ", the field STR_ID can also be set at the predetermined value of a non-valid stream identifier. In this case, the receiver of the message I_REQ must process the configuration of the connection for the last source of the type defined by the field DVT in its list of sources available on its local bus.

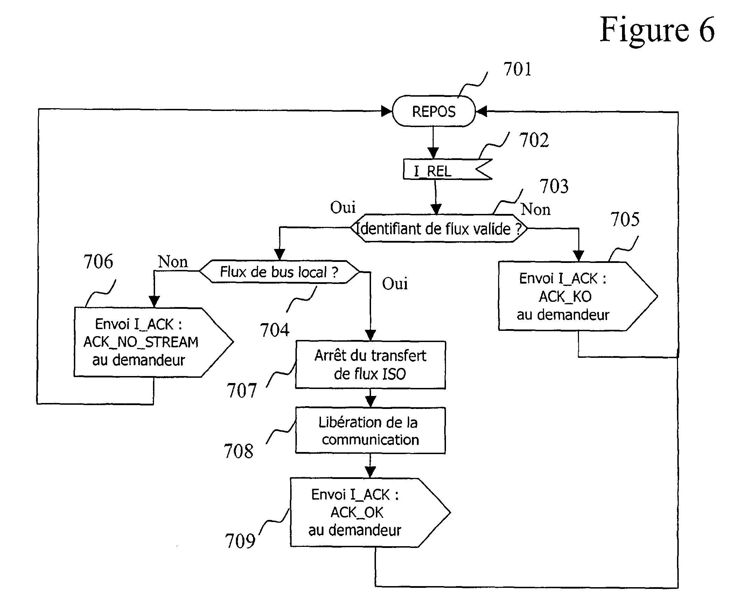

**Figure 6** represents the algorithm for the release of a stream connection according to the invention, executed by a multimedia interface device (source node) to which a source terminal is connected.

Let us take up the example used to explain figure 4. When the multimedia interface device 103d no longer needs an already established stream, it can request the elimination of the stream connection. As described here below with reference to figure 8, it may therefore send a message I_REL to the multimedia interface device 103b.

The multimedia interface device 103b receives a message I_REL at the step 702. The multimedia interface device 103b then analyses the message I_REL received to ascertain that it contains a valid stream identifier (step 703). If this is not the case, it sends a message I_ACK to the multimedia interface device 103d indicating the presence of an inconsistency in the message I_REL (step 705). If not, it carries out an analysis on the question of whether the stream identifier contained in the field STR_ID of the message I_REL refers to a stream of its local bus (step 704) and, if this stream is already forwarded to the multimedia interface device 103d, it stops the transmission of the stream to the multimedia interface device 103d (steps 707 and 708). It then sends a message I_ACK to the multimedia interface device 103d (step 709), indicating the successful execution of the procedure for releasing a stream connection. If the analysis of the stream identifier reveals an inconsistency, the receiver of the message I_REL send back a message I_ACK to the sender indicating this inconsistency (step 706).

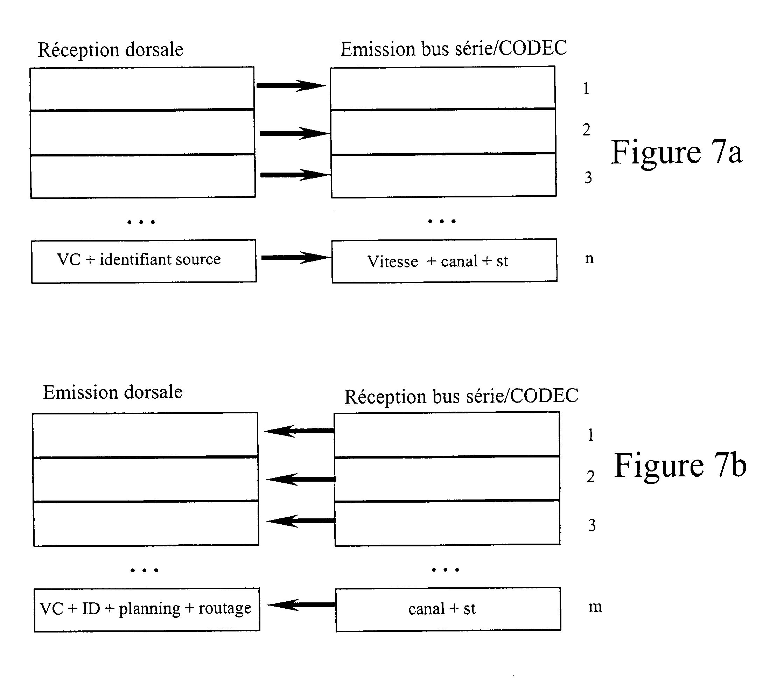

**Figures 7a and 7b** represent pairs of stream control tables managed by the multimedia interface devices of the home network.

Figure 7a shows a first pair of stream control tables 801, 802 managed by a multimedia interface device (a destination node forming an intermediary device) to which a destination terminal is connected. It can be applied to the stream crossing the multimedia interface device from the interface of the home network backbone (or backbone network) to the AV interface of the room (CODEC or IEEE1394 serial bus, as described here above with reference to figure 2).

Figure 7b shows a second pair of stream control tables 801, 802 managed by a multimedia interface device (a destination node) to which a destination terminal is connected. It can be applied to the stream crossing the multimedia interface device from the interface of the home network backbone (or backbone network) to the AV interface of the room (CODEC or IEEE1394 serial bus, as described here above with reference to figure 2)

It is clear that, in practice, a same multimedia interface device may include these two pairs of control tables since, for certain streams, it can behave like a source node (to which a source terminal is connected) and, for other streams, it can behave like a destination node (to which a destination terminal is connected).

Each row of a stream control table corresponds to a transmission or reception queue, as described here above with reference to figure 2. In figures 7a and 7b, several stream control table lines are shown, each line being associated with a stream transmission or reception queue. For cost reasons, the multimedia interface device may contain only a limited number of reception queues (and also transmission queues) to limit the internal memory required from the multimedia interface device.

Each line of the first pair of stream control tables 801, 802 sets up a correspondence between a stream descriptor on the "backbone reception" side 803, contained in the left-hand table 801, and a stream descriptor on the "serial bus transmission/CODEC" side 804, contained in the right-hand table 802.

The "backbone reception" side stream descriptor 803 contains the transmission channel (VC) and the source identifier of the backbone (source node) as indicated in the header of the packet 600 defined in figures 5a, 5b and 5c. The "serial bus transmission/CODEC" side stream descriptor 804 contains the speed (100, 200 or 400 Mbps as defined by the IEEE1394 standard ) at which the stream is transferred on the local bus of the multimedia interface device, as well as the isochronous channel to be used. It may also contain a field ST used to indicate the fact that the transfer of the stream from the backbone to the local serial bus must begin.

Each line of the second pair of stream control tables 805, 806 sets up a correspondence between a "serial bus reception/CODEC" stream descriptor 808, contained in the right-hand table 806, and a "backbone transmission" side stream descriptor 807, contained in the left-hand table 805.

The description of the second pair of stream control tables 805, 806 is practically identical to that of the first pair of stream control tables 801, 802.

It must be noted however that the stream descriptor on the "serial bus reception/CODEC" side 808 indicates only the isochronous channel to be used as well as, possibly, a field ST used to indicate that the transfer of the stream from the local serial bus to the backbone must begin.

Furthermore, the "the backbone transmission" side stream descriptor 807 contains an identifier of the channel (VC) used to transfer the stream to the backbone, an identifier of the transmission multimedia interface device (source node) (this identifier may be contained in the distinct register common to all the transmissions), a scheduling parameter and a routing parameter to reach the multimedia interface device that is a receiver of the stream on the backbone (destination node).

**Figure 8** consists of the figures 8a, 8b, 8c and 8d. It represents the stream connection management algorithm according to the invention, executed by a multimedia interface device (destination node forming the intermediary device) to which a destination terminal is connected.

In the exemplary home network illustrated in figure 1, the destination terminal is, for example, the analog television set referenced 107d, which is connected to the multimedia interface device referenced 103d.

Figure 8 illustrates an embodiment of the invention in which the remote controller 400 (figure 3a), enabling the user to zap from one data stream to another, has only two keys 402 and 404 (LEFT and RIGHT). However, the principle remains identical in the case illustrated in figure 3a where the remote controller has two additional keys 406 and 407 (DOWN and UP).

The algorithm starts in an "OFF" state (step 901) where the reception of the multimedia interface device which must receive the stream from the backbone is deactivated. This does not mean that the multimedia interface device is powered off, but only that the stream reception means are not activated. This enables the multimedia interface device to receive asynchronous data packets coming from the backbone for the management of the home network and also to manage connections involving AV sources located on its local serial bus. At the step 902, the user activates the multimedia interface device.

The multimedia interface device then takes the information that it has recorded, for example, in the flash memory 305 (step 903). This information contains all the parameters needed to set up a connection with the AV source that the user was looking at when he "deactivated" the multimedia interface device.

At the step 904, the multimedia interface device 103d builds a message I_REQ sent to the appropriate multimedia interface device, for example the one referenced 103b in figure 1, to set up a stream connection corresponding to the parameters taken in the memory at the step 903.

The multimedia interface device then waits for the message I_ACK (steps 905 and 906).

If the message I_ACK indicates that the setting up of the stream connection has failed (with a negative response at the step 907) (the source may have disappeared from the home network, etc.), the multimedia interface device 103d may build another message I_REQ designed for the same multimedia interface device 103b, with a non-valid stream identifier value in the field STR_ID and the field DIR indicating "+ " or "- ". This means that it asks the multimedia interface device 103b to set up a stream connection with the former and latter source respectively, in the list of available sources managed by the multimedia interface device 103b.

When a stream connection is successfully obtained on the backbone with a positive response at the step 907), then, at the step 908, the multimedia interface device 103d updates the stream control tables 801 and 802 (figure 7a) so that the stream received from the backbone crosses the multimedia interface device (forming the bridge) 103d to the appropriate screen (destination terminal). The field DVT of the message I_ACK indicates which decoder must be used by the multimedia interface device 103d to interpret the AV data stream.

At the step 909, the multimedia interface device 103d asks the multimedia interface device 103b to set up a stream connection with the next source available on the local bus. It thus uses the already established connection requested at the step 904 as a reference in the field STR_ID and it sets the field DIR at "+ "in the message I_REQ. Since the stream control table 802 (on the "serial bus transmission/CODEC" side) is not updated to transfer the requested stream at the step 909, the segmentation and re-assembly module 303 (figure 2), which is responsible for the interfacing of the Y-link module 204 and the transmission/reception queues 302 and 302, rejects all the packets constituting the stream requested at the step 909. This preserves the reception queues 302 for any use by other applications. This characteristic is particularly useful and beneficial for multimedia interface devices having a very limited number of reception queues 302 (one or two of them).

The multimedia interface device then waits for the message I_ACK (steps 910 and 911).

If the message I_ACK relative to the message I_REQ sent at the step 909 indicates that the stream connection is set up (with an affirmative response at the step 912), the multimedia interface device 103d, without any programming of the stream control table 802 (on the "serial bus transmission/CODEC" side) to transfer the stream to its local bus, makes a request at the step 913 for setting up a stream connection with the preceding source available at its local bus. It thus uses the connection already set up which had been requested at the step 904 as a reference in the field STR_ID and it sets the field DIR on "-" in the message I_REQ.

The multimedia interface device then waits for the message I_ACK (steps 914 and 915).

If there is no longer any stream available on the bus, the message I_ACK corresponding to the message I_REQ sent during the step 909 or 913 is filled with the value ACK_NO_STREAM in the field ACK__VAL (with a negative response at the step 912 or 916). The multimedia interface device 103d thus knows that there is no longer any stream before or after (as a function of the field DIR of the message I_REQ) the stream identified by the value in the field STR_ID on the local bus of the multimedia interface device 103b. The multimedia interface device 103d can then build another message I_REQ (with a return to the step 909 or 913) intended for another multimedia interface device 103b, with a non-valid stream identifier value in the field STR_ID and the field DIR indicating "+ or "- ".

In an alternative embodiment, it is possible to include other criteria than the absence of available streams on the bus so that the multimedia interface device 103d can build a message I_REQ designed for another multimedia interface device 103b. For example, the second criterion may be the absence of resources (value ACK_NO_RESOURCE in the message I_ACK) which may necessitate a change of bus even if streams are still available on the first bus.

Thus, if the multimedia interface device 103d intends to obtain the next available stream (field DIR of I_REQ set at "+"), it requests a stream connection to the multimedia interface device 103c which is the multimedia interface device managing the next serial bus available on the home network. It thus sends the message I_REQ to the multimedia interface device 103c with a non-valid stream identifier as the value of the field STR_ID and with "+ "set in the field DIR. This message requests the multimedia interface device 103c to set up a connection with the first source present in its list of sources available on its local bus.

If the multimedia interface device 103d intends to obtain the available preceding stream (field DIR of I_REQ set at "- "), then it asks for a stream connection to the multimedia interface device 103a of the home network which is the multimedia interface device managing the preceding serial bus available on the home network. It thus sends a message I_REQ to the multimedia interface device 103a with a non-valid stream identifier as the field value STR_ID and with "- " set in the field DIR. This message asks the multimedia interface device 103a to set up a connection with the last source present in its list of sources available at its local bus.

It is the same method that is used to pre-set connections with the next/preceding serial bus of the home network when the user interface consists of four buttons: one button to select the preceding stream, one button to select the next stream, one button to select the first stream available on the next serial bus (namely one room, since there is preferably one serial bus per room) and one button to select the last stream available on the preceding serial bus.

If the message I_ACK pertaining to the message I_REQ sent at the step 913 indicates that the stream connection is set up (with an affirmative response at the step 916), the method passes to the step 917 corresponding to a state of "waiting for validation" (WAIT_VALID).

The multimedia interface device 103d is in a configuration here where three stream connections (one full stream connection and two partial stream connections) have been set up with other terminals of the home network to which AV sources are connected. Only one AV stream effectively crosses the multimedia interface device (full connection), the other two being rejected by the SAR 303 (partial connections).

If the user interface consists of four buttons for the four possible directions UP, DOWN, LEFT and RIGHT, the multimedia interface device 103d, at the step 917, is in a configuration in which up to five stream connections (one full connection and four partial connections) have been set up with other terminals of the home network to which AV sources have been connected. A single AV stream effectively crosses the multimedia interface device (for a connection), the other four streams being rejected by the SAR 303 (partial connections). Fewer than five stream connections are sometimes set up, because there are configurations in which DOWN and LEFT target the same stream. The analogy may be made with the keys UP and RIGHT.

One variant consists in displaying the current stream (resulting from the transmission of the message I_REQ at the step 904) only when the partial stream connections are set up on the backbone, namely between the step 916 and the step 917. Analogically, it consists in displaying a new current stream, resulting from a selection by the user from amongst the next and preceding streams, only when the new connections of partial streams (which are a function of the new current stream) are set up on the backbone (for example between the step 939 and the step 917).

The impact of this variant on the user interaction is that it explicitly shows that the action on the buttons 402, 404, 406, 407, 408, 409, 410 and 411 (see figures 3a and 3b) is interpreted only when the previously selected stream is displayed on the television set 107d. This variant is reinforced by figure 8d which shows that any action on the buttons 402, 404, 408 and 409 takes effect only if the algorithm is in the "idle" state (IDLE) at the step 942, or in the "waiting for validation" state (WAIT_VALID) at the step 917. If not, the user commands recorded through the use of these buttons are rejected.

At the step 917, the algorithm waits for the user's actions: the key LEFT 402, the key RIGHT 404 and the key SEL 405 of the remote controller can be used (in addition to the buttons of the multimedia interface device and the UP/DOWN buttons in the variant using four direction buttons). A time delay system may also be added in passing to the step 917. The multimedia interface device 103d may interpret the expiry of this time lag as if the user had pressed the key SEL 405 (VALID at the step 920). This makes it possible to eliminate the key SEL 405 of the remote control and above all to eliminate a button of the multimedia interface device (as illustrated in figure 3b).

If the user presses the key LEFT 402 (or the buttons 408 of the multimedia interface device) at the step 919, he indicates that he wishes to display the preceding available source (step 922). The multimedia interface device actualizes the stream control table 801 (on the "the backbone reception" side) to stop the transfer of the current stream (the previously displayed stream) and start the transfer of the preceding stream (entailing a passage for this stream from a partial connection to a full connection), namely from the stream generated by the source preceding the one which was displayed in the list of available sources of the multimedia interface device 103b (or by the last source in the list of available sources of the multimedia interface device 103a). The previously displayed stream becomes the stream of the next source relative to with the source being displayed (step 925). The multimedia interface device 103d only has to ask for a (partial) stream connection for the preceding available source relative to the stream being displayed (step 931) and then abort the (partial) connection concerning the next source for the previously displayed stream (step 928). The order of these two actions may be inverted.

The multimedia interface device then waits for the message I_ACK (steps 933 and 936). If the message I_ACK indicates that the setting up of the stream connection has failed (with a negative response at the step 939), the multimedia interface device 103d may build another message I_REQ intended for the same multimedia interface device 103b or another multimedia interface device 103a. If the message I_ACK relative to the message I_REQ sent at the step 931 indicates that the stream connection is set up (with an affirmative response at the step 939), there is a return to the step 917.

If the user presses the key RIGHT 404 (or the buttons 409 of the multimedia interface device) at the step 918, he indicates that he wishes to view the next available source (step 921). The multimedia interface device updates the stream control table 801 (on the "backbone reception" side) to stop the transfer of the current stream (previously viewed stream) and start the transfer of the next stream (entailing the passage for this next stream from a partial connection to a full connection), namely that of the stream generated by the source following the one which was displayed in the list of the available sources of the multimedia interface device 103b (or by the first source on the list of the available sources of the multimedia interface device 103c). The previously displayed stream becomes the stream of the preceding source relative to the source being displayed (step 924). The multimedia interface device 103d only has to ask for a (partial) stream connection for the next available source relative to the stream being displayed (step 930) and then abort the (partial) connection concerning the preceding source for the previously displayed stream (step 927. The order of these two actions may be inverted.

The multimedia interface device then waits for the message I_ACK (steps 932 and 935). If the message I_ACK indicates that the setting up of the stream connection has failed (with a negative response at the step 938), the multimedia interface device 103d can build another message I_REQ intended for a same multimedia interface device 103b or another multimedia interface device 103c. If the message I_ACK relative to the message I_REQ sent at the step 930 indicates that the stream connection is set up (affirmative response at the step 938), there is a return to the step 917.

Once the user is satisfied with the contents that he has displayed, he can press the key SEL 405 (or simply be patient until the expiry of the time lag) to validate the stream that he views (step 920). The partial stream connections can be released (steps 923 and 926) to preserve the internal means of the multimedia interface devices and the free resources on the home network backbone.

Furthermore, the user can access the source generating the stream that he views. To this end, the multimedia interface device 103d sends a message C_REQ (a control request) (step 929) and waits for a message C_ACK (acknowledgement of reception of control request) (steps 934 and 937), enabling the opening of the control connection to the AV source terminal (steps 940 and 941). This aspect does not form part of the object of the present invention and shall therefore not be described in detail.

The algorithm then goes to the "idle" state (IDLE) (step 942).

If the user again presses the key LEFT (and RIGHT respectively), at the step 944 (and 943 respectively), the multimedia interface device 103d then asks for the setting up of a stream connection for the preceding available source (and the next available source respectively), at the steps 947, 951, 954, 956 and 958 (946, 950, 953, 955 and 957 respectively). At the step 960 (and 959 respectively), the source being viewed becomes the new next source (and preceding source respectively), and the first preceding source (and next source respectively) becomes the viewed source. During the steps 962, 964, 966 and 968 (961, 963, 965 and 967 respectively), the multimedia interface device 103d requests the setting up of a stream connection with the new preceding source (and the next source respectively). The system then goes back to the "the wait for validation" state (WAIT_VALID) (step 917).

If the user decides to deactivate the multimedia interface device (i.e. only the reception means, as has already been described here above in the document) at the step 945, the information on the stream being displayed is recorded (step 948) in the flash memory 305 so that it can be extracted at the next activation of the multimedia interface device. The stream connection viewed is also aborted to preserve the resources of the home network.

Even if this has not been described in detail in figure 8 for simplicity's sake, the user may ask at any time for the multimedia interface device to be deactivated. In any state whatsoever, when the signal "OFF" sent by pressing the key 403 of the remote control is detected, the multimedia interface device 103d asks for the release of all the (full and partial) stream connections in which it is implicated and it also aborts all the stream connections for which it has sent a message I_REQ without having already received the corresponding message I_ACK (it may also wait for the I_ACK message to abort these connections).

It is the object of the invention therefore to preset one or more stream connections (partial connections) using one or more AV sources connected to the home network, as a function of the source that the user is viewing and the actions that he may perform.

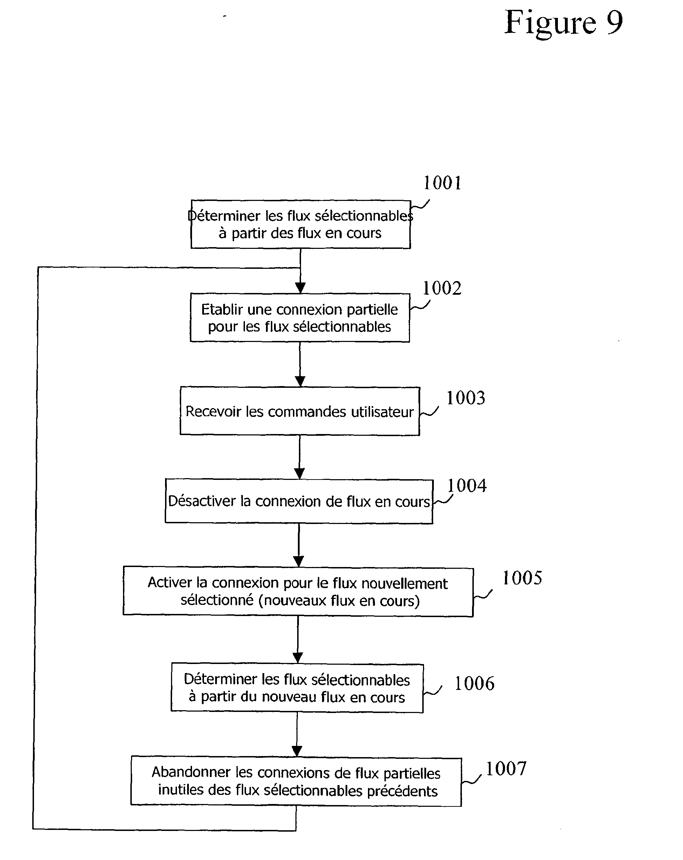

**Figure 9** shows the general algorithm of the method according to the invention for the selection of a stream from amongst a plurality of streams and for the setting up of a connection for the selected stream.

First of all, during the step 1001, the multimedia interface device (destination node) to which a destination terminal is connected (for example a television set) determines the selectable stream that the user can access by using the browsing keys of the remote control or the buttons of the front face of the multimedia interface device. The selectable streams depend directly on the stream being displayed.

Then (in the step 1002), the multimedia interface device sets up partial connections for these selectable streams. This means that the stream connection is set up from the source terminal to the multimedia interface device, which does not send the streams to the destination terminal at this stage.

When the use of a browsing key is detected on the screen (step 1003), and the multimedia interface device extracts the desired stream from amongst the selectable streams (the next stream and the preceding stream for example). In the step 1004, in deactivated the current stream connection (this connection thus becomes a partial connection, the stream data being rejected by the multimedia interface device) and then activates a connection of the stream newly selected by the user (step 1005).

The multimedia interface device can then reassess the selectable streams as a function of the newly selected stream (with the new current stream displayed on the television set) (step 1006), abort the unnecessary, partial stream connections (for preceding selectable stream is) (step 1007) and return to the step 1002 (with a request for setting up a partial connection for the new selectable streams).

## Claims

1. A method for setting up a connection of a data stream from amongst a plurality of data streams generated by a plurality of source terminals, the source terminals and a destination terminal being connected to a communications network, this method comprising the following steps:
(a) a full connection is set up for a current stream, between one of the source terminals, which is a current source terminal, and the destination terminal through an intermediary device;
(b) a subset of selectable streams is determined (1001) as a function of the current stream, this subset comprising at least one stream, said at least one stream can be selected through means for sending selection commands;
(c) for each selectable stream, a partial connection of said selectable stream is set up (1002) between the source terminal generating said selectable stream and the destination terminal through the intermediary device, said connection being partial in that the intermediary device does not let through said selectable stream to the destination terminal;
(d) on occurrence of a predetermined event, the intermediary device lets through (1005) one of said selectable streams to the destination terminal, so that a full connection of said stream is set up between the source terminal generating said stream and the destination terminal.

2. A method according to claim 1, wherein said predetermined event is the reception (1003) by the intermediary device of a command for selecting a selectable stream.

3. A method according to claim 2, wherein, at the reception of a command for selecting a data stream, called selected stream:
- the selected stream becomes the new current stream;
- the steps (b) and (c) are reiterated with the new current stream (1006, 1002), with a view to a new iteration of the step (d).

4. A method according to any of the claims 1 to 3, wherein the subset of selectable streams comprises:
- at least one preceding stream that precedes the current stream according to a determined stream classification;
- at least one next stream that follows the current stream according to the determined stream classification.

5. A method according to either one of the claims 1 to 4, wherein the network comprises nodes forming a backbone network (100, 101a to 101d) to which the following are connected:
- one or more sub-networks to which the source terminals are connected, each being connected to the backbone network through a source node,
- one sub-network to which the destination terminal is connected, this sub-network being connected to the backbone network through a destination node, and wherein the intermediary device is one of said nodes (103a to 103d).

6. A method according to claim 5, wherein the intermediary device is the destination node.

7. A method according to any of the claims 4 to 6, wherein the preceding stream is generated from a source terminal being connected to the same sub-network as the current source terminal and wherein said preceding stream precedes the current stream according to a determined stream classification proper to said sub-network.

8. A method according to any of the claims 4 to 6, wherein the preceding stream is generated from a source terminal being connected to a preceding sub-network that precedes the sub-network to which the current source terminal is connected, according to a determined classification of sub-networks, and wherein said preceding stream is the last stream according to a determined stream classification proper to said preceding sub-network.

9. A method according to any of the claims 4 to 8, wherein the next stream is generated from a source terminal being connected to the same sub-network as the current source terminal and wherein said next stream follows the current stream according to a determined stream classification proper to said sub-network.

10. A method according to any of the claims 4 to 8, wherein the next stream is generated from a source terminal being connected to a next sub-network that follows the sub-network to which the current source terminal is connected according to a determined classification of sub-networks, and wherein said next stream is the first stream according to a determined stream classification proper to said next sub-network.

11. A method according to any of the claims 3 to 10, furthermore comprising a step of validating the selected stream, after the full connection of said selected stream has been made.

12. A method according to claim 11, wherein the step of validating the selected stream is activated by an event belonging to the group comprising::
- reception by the intermediary device of a validation command specific to said selected stream, the sending of which results from usage of said command transmission means;
- expiry of a time delay activated beforehand by a reception of a selection command specific to a particular stream.

13. A method according to any of the claims 1 to 12, furthermore comprising a step (1007) for the release of at least one partial connection, performed:
- subsequently to any iteration of the step (b) for determining a subset of selectable streams; and/or
- subsequently to any iteration of a step of validating a selection of a particular stream; and/or
- subsequently to a step of deactivating the intermediary device.

14. A method according to any of the claims 5 to 13, wherein, for each selectable stream, the setting up of a partial connection of said selectable stream comprises the following steps:
i. the intermediary device sends a stream connection request to a first determined source node, said request defining at least one criterion for determining said selectable stream;
ii. if, on its sub-network, the first source node determines there is available a source terminal generating a stream meeting said at least one criterion defined in the request, the first source node sends a positive acknowledgement message to the intermediary device and the partial connection is set up;
iii. if not, the first source node sends a negative acknowledgement message and the steps (i) to (iii) are reiterated with the first source node but in modifying said at least one criterion of choice, or with a second source node.

15. A method according to claim 14, wherein said request defines at least the following two criteria of choice:
- a stream identifier (STR_ID);
- a piece of information (DIR) on a stream search direction in a stream classification proper to the sub-network that is connected to the backbone through the source node receiving the request.

16. A method according to any of the claims 13 to 15 wherein, for each partial connection of a selectable stream, the release of said partial connection comprises the following steps:
(1) the intermediary device sends a message requesting a stream release to the source node whose associated sub-network is connected to the source terminal generating said stream to be released, said release request message defining at least one criterion of choice of the stream to be released;
(2) if the source node determines there is available, on its sub-network, a source terminal generating a stream meeting said at least one criterion of choice defined in the release request message, the source node sends a positive acknowledgement message to the intermediary device and the partial connection is released;
(3) if not, the source node sends a negative acquittal message to the intermediary device and the steps (1) to (3) are reiterated with the same source node, but in modifying said at least one criterion of choice of the stream to be released, or with a second source node.

17. A computer program comprising program code instructions for the execution of the steps of the method according to any of the claims I to 16, when said program is executed on a computer.

18. An intermediary device used in the implementation of a method for setting up a connection of a data stream from amongst a plurality of data streams generated by a plurality of source terminals, the source terminals and a destination terminal being connected to a communications network, a full connection of a current stream being set up between one of the source terminals, which is a current source terminal, and the destination terminal, through the intermediary device, wherein the intermediary device comprises:
- means for obtaining a subset of selectable streams as a function of the current stream, this subset comprising at least one stream capable of being selected through means for the transmission of selection commands;
- means for setting up, for each selectable stream, a partial connection of said selectable stream between the source terminal generating said selectable stream and the destination terminal, said connection being partial in that the setting up means do not let through said selectable stream to the destination terminal;
- means for detecting an occurrence of a predetermined event,
and wherein, when they detect an occurrence of said predetermined event, the detecting means deactivate the setting up means to let through one of said selectable streams to the destination terminal, so that a full connection of said stream is set up between the source terminal generating said stream and the destination terminal.

19. An intermediary device according to claim 18, wherein said predetermined event is the reception by the intermediary device of a command for selecting a selectable stream.

20. An intermediary device according to claim 19, wherein when the detecting means receive the command for selecting a stream, called selected stream:
• the selected stream becomes the new current stream;
• the detecting means again activates said means for obtaining a subset of selectable streams and said setting up means, for each selectable stream, with a view to a new reception by said reception means of said command for selecting a stream.

21. An intermediary device according to any of the claims 18 to 20, wherein the subset of selectable streams comprises:
- at least one preceding stream that precedes the current stream according to a determined stream classification;
- at least one next stream that follows the current stream according to the determined stream classification.

22. An intermediary device according to any of the claims 18 to 21, wherein the network comprises nodes forming a backbone network to which the following are connected:
- each through a source node, one or more sub-networks to which the source terminals are connected;
- through a destination node, one sub-network to which the destination terminal is connected
and wherein the intermediary device is one of said nodes.

23. An intermediary device according to claim 22, wherein the intermediary device is the destination node.

24. An intermediary device according to any of the claims 18 to 23, furthermore comprising means for validating the selected stream, after the full connection of said selected stream has been set up.

25. An intermediary device according to any of the claims 18 to 24, furthermore comprising means for releasing at least one partial connection, activated:
- subsequently to any activation of the means for determining a subset of selectable streams; and/or
- subsequently to any activation of the means for validating the selection of a particular stream; and/or
- subsequently to a deactivation of the intermediary device.

26. An intermediary device according to any of the claims 22 to 25 wherein, for each selectable stream, the means for setting up a partial connection of said selectable stream comprise:
- means for sending a stream connection request to a first determined source node, said request defining at least one criterion for determining said selectable stream;
- means for receiving an acknowledgment message such that:
- if, on its sub-network, the first source node determines there is available a source terminal generating a stream meeting said at least one criterion defined in the request, the first source node sends a positive acknowledgement message to the intermediary device which activates the means for setting up a partial connection;
- if not, the first source node sends a negative acknowledgement message and the intermediary device again activates the means for sending a stream connection request and the means for the reception of an acknowledgment, either with the first source node but in modifying said at least one criterion of choice, or with a second source node.

27. An intermediary device according to any of the claims 25 to 26, wherein said means for releasing said partial connection comprise:
- means for sending a stream release request to the source node whose associated sub-network is connected to the source terminal generating the stream to be released, said release request message defining at least one criterion of choice of the stream to be released;
- means for receiving an acknowledgment message such that:
• if the source node determines there is available, on its sub-network, a source terminal generating a stream meeting said at least one criterion of choice defined in the release request message, the source node sends a positive acknowledgement message to the intermediary device which activates the partial connection release means;
• if not, the source node sends a negative acknowledgement message to the intermediary device and the intermediary device again activates means for sending a stream release request and the means for receiving an acknowledgment message, either with the same source node but in modifying said at least one criterion of choice, or with a second source node.

## Patentansprüche

1. Verfahren zum Aufbauen einer Verbindung eines Datenstroms unter einer Vielzahl von durch eine Vielzahl von Quellendgeräten erzeugten Datenströmen, wobei die Quellendgeräte und ein Zielendgerät mit einem Kommunikationsnetzwerk verbunden sind, mit den Schritten:
(a) eine Vollverbindung wird für einen momentanen Strom zwischen einem der Quellendgeräte, das ein momentanes Quellendgerät ist, und dem Zielendgerät durch eine Zwischenvorrichtung aufgebaut,
(b) eine Untermenge von auswählbaren Strömen wird als eine Funktion des momentanen Stroms bestimmt (1001), wobei diese Untermenge zumindest einen Strom umfasst, wobei der zumindest eine Strom durch eine Einrichtung zum Senden von Auswahlbefehlen ausgewählt werden kann,
(c) für jeden auswählbaren Strom wird eine partielle Verbindung des auswählbaren Stroms zwischen dem den auswählbaren Strom erzeugenden Quellendgerät und dem Zielendgerät durch die Zwischenvorrichtung aufgebaut (1002), wobei die Verbindung **dadurch** partiell ist, dass die Zwischenvorrichtung den auswählbaren Strom nicht zu dem Zielendgerät durchlässt,
(d) bei Auftreten eines vorbestimmten Ereignisses lässt die Zwischenvorrichtung einen der auswählbaren Ströme zu dem Zielendgerät durch (1005), so dass eine Vollverbindung des Stroms zwischen dem den Strom erzeugenden Quellendgerät und dem Zielendgerät aufgebaut wird.

2. Verfahren nach Anspruch 1, wobei das vorbestimmte Ereignis der Empfang (1003), durch die Zwischenvorrichtung, eines Befehls zum Auswählen eines auswählbaren Stroms ist.

3. Verfahren nach Anspruch 2, wobei bei dem Empfang eines Befehls zum Auswählen eines Datenstroms, der als ausgewählter Strom bezeichnet wird:
- der ausgewählte Strom der neue momentane Strom wird,
- die Schritte (b) und (c) mit dem neuen momentanen Strom (1006, 1002) im Hinblick auf einen neuen Durchlauf des Schritts (d) wieder durchlaufen werden.

4. Verfahren gemäß zumindest einem der Ansprüche 1 bis 3, wobei die Untermenge von auswählbaren Strömen umfasst:
- zumindest einen vorangehenden Strom, der dem momentanen Strom gemäß einer bestimmten Stromklassifizierung vorangeht,
- zumindest einen nächsten Strom, der dem momentanen Strom gemäß der bestimmten Stromklassifizierung nachfolgt.

5. Verfahren gemäß zumindest einem der Ansprüche 1 bis 4, wobei das Netzwerk Knoten umfasst, die ein Basisnetzwerk (100, 101a bis 101d) bilden, mit dem Folgende verbunden sind:
- ein oder mehrere Unternetzwerke, mit dem oder denen die Quellendgeräte verbunden sind, wobei jedes mit dem Basisnetzwerk durch einen Quellknoten verbunden ist,
- ein Unternetzwerk, mit dem das Zielendgerät verbunden ist, wobei dieses Unternetzwerk mit dem Basisnetzwerk durch einen Zielknoten verbunden ist, und wobei die Zwischenvorrichtung einer der Knoten (103a bis 103d) ist.

6. Verfahren nach Anspruch 5, wobei die Zwischenvorrichtung der Zielknoten ist.

7. Verfahren gemäß zumindest einem der Ansprüche 4 bis 6, wobei der vorangehende Strom von einem Quellendgerät erzeugt wird, das mit dem gleichen Unternetzwerk wie das momentane Quellendgerät verbunden ist, und wobei der vorangehende Strom dem momentanen Strom gemäß einer für das Unternetzwerk geeigneten, bestimmten Stromklassifizierung vorangeht.

8. Verfahren gemäß zumindest einem der Ansprüche 4 bis 6, wobei der vorangehende Strom von einem Quellendgerät erzeugt wird, das mit einem vorangehenden Unternetzwerk verbunden ist, das dem Unternetzwerk, mit welchem das momentane Quellendgerät verbunden ist, gemäß einer bestimmten Klassifikation von Unternetzwerken vorangeht, und wobei der vorangehende Strom gemäß einer für das vorangehende Unternetzwerk geeigneten, bestimmten Stromklassifizierung der letzte Strom ist.

9. Verfahren gemäß zumindest einem der Ansprüche 4 bis 8, wobei der nächste Strom von einem Quellendgerät erzeugt wird, das mit dem gleichen Unternetzwerk wie das momentane Quellendgerät verbunden ist, und wobei der nächste Strom dem momentanen Strom gemäß einer für das Unternetzwerk geeigneten, bestimmten Stromklassifizierung nachfolgt.

10. Verfahren gemäß zumindest einem der Ansprüche 4 bis 8, wobei der nächste Strom von einem Quellendgerät erzeugt wird, das mit einem nächsten Unternetzwerk verbunden ist, das dem Unternetzwerk nachfolgt, mit dem das momentane Quellendgerät gemäß einer bestimmten Klassifizierung von Unternetzwerken verbunden ist, und wobei der nächste Strom gemäß einer für das nächste Unternetzwerk geeigneten, bestimmten Stromklassifizierung der erste Strom ist.

11. Verfahren gemäß zumindest einem der Ansprüche 3 bis 10, weiterhin mit einem Schritt zum Validieren des ausgewählten Stroms, nachdem die Vollverbindung des ausgewählten Stroms erstellt wurde.

12. Verfahren nach Anspruch 11, wobei der Schritt zum Validieren des ausgewählten Stroms durch ein Ereignis aktiviert wird, das zu der Gruppe gehört, die umfasst:
- Empfang, durch die Zwischenvorrichtung, eines für den ausgewählten Strom spezifischen Validierungsbefehls, dessen Senden aus einer Verwendung der Befehlsübertragungseinrichtung resultiert,
- Auslaufen einer Zeitverzögerung, die zuvor durch einen Empfang eines für einen einzelnen Strom spezifischen Auswahlbefehls aktiviert wird.

13. Verfahren gemäß zumindest einem der Ansprüche 1 bis 12, weiterhin mit einem Schritt (1007) zum Freigeben von zumindest einer partiellen Verbindung, der durchgeführt wird:
- nach irgendeinem Durchlauf des Schritts (b) zum Bestimmen einer Untermenge von auswählbaren Strömen, und/oder
- nach irgendeinem Durchlauf eines Schritts zum Validieren einer Auswahl eines einzelnen Stroms, und/oder
- nach einem Schritt zum Deaktivieren der Zwischenvorrichtung.

14. Verfahren gemäß zumindest einem der Ansprüche 5 bis 13, wobei für jeden auswählbaren Strom das Aufbauen einer partiellen Verbindung des auswählbaren Stroms die nachfolgenden Schritte umfasst:
i. die Zwischenvorrichtung sendet eine Stromverbindungsanforderung zu einem ersten bestimmten Quellknoten, wobei die Anforderung zumindest ein Kriterium zum Bestimmen des auswählbaren Stroms definiert,
ii. falls der erste Knoten bezüglich seines Unternetzwerks bestimmt, dass ein Quellendgerät zur Verfügung steht, das einen Strom erzeugt, der das zumindest eine in der Anforderung definierte Kriterium erfüllt, sendet der erste Quellknoten eine positive Zurkenntnisnahmenachricht zu der Zwischenvorrichtung, und eine partielle Verbindung wird aufgebaut,
iii. falls dem nicht so ist, sendet der erste Quellknoten eine negative Zurkenntnisnahmenachricht, und die Schritte (i) bis (iii) werden mit dem ersten Quellknoten, wobei aber das zumindest eine Wahlkriterium modifiziert wird, oder mit einem zweiten Quellknoten wieder durchlaufen.

15. Verfahren nach Anspruch 14, wobei die Anforderung zumindest die folgenden zwei Wahlkriterien definiert:
- eine Stromkennung (STR_ID),
- einen Informationsteil (DIR) bezüglich einer Stromsuchrichtung in einer Stromklassifizierung, die für das Unternetzwerk geeignet ist, das mit dem Basisnetz durch den die Anforderung empfangenden Quellknoten verbunden ist.

16. Verfahren gemäß zumindest einem der Ansprüche 13 bis 15, wobei für jede partielle Verbindung eines auswählbaren Stroms die Freigabe der partiellen Verbindung die nachfolgenden Schritte umfasst:
(1) die Zwischenvorrichtung sendet eine eine Stromfreigabe anfordernde Nachricht zu dem Quellknoten, dessen zugehöriges Unternetzwerk mit dem Quellendgerät verbunden ist, das den freizugebenden Strom erzeugt, wobei die Freigabeanforderungsnachricht zumindest ein Wahlkriterium des freizugebenden Stroms definiert,
(2) falls der Quellknoten bestimmt, dass bei seinem Unternetzwerk ein Quellendgerät zur Verfügung steht, das einen Strom erzeugt, der zumindest ein in der Freigabeanforderungsnachricht definiertes Wahlkriterium erfüllt, sendet der Quellknoten eine positive Zurkenntnisnahmenachricht zu der Zwischenvorrichtung, und die partielle Verbindung wird freigegeben,
(3) falls dem nicht so ist, sendet der Quellknoten eine negative Bestätigungsnachricht zu der Zwischenvorrichtung, und die Schritte (1) bis (3) werden mit dem gleichen Quellknoten, wobei aber das zumindest eine Wahlkriterium des freizugebenden Stroms modifiziert wird, oder mit einem zweiten Quellknoten wieder durchlaufen.

17. Computerprogramm mit Programmcodeanweisungen für die Ausführung der Schritte des Verfahrens gemäß zumindest einem der Ansprüche 1 bis 16, wenn das Programm auf einem Computer ausgeführt wird.

18. Zwischenvorrichtung, die bei der Implementierung eines Verfahrens zum Aufbauen einer Verbindung eines Datenstroms unter einer Vielzahl von durch eine Vielzahl von Quellendgeräten erzeugten Datenströmen verwendet wird, wobei die Quellendgeräte und ein Zielendgerät mit einem Kommunikationsnetzwerk verbunden sind, wobei eine Vollverbindung eines momentanen Stroms zwischen einem der Quellendgeräte, das ein momentanes Quellendgerät ist, und dem Zielendgerät durch die Zwischenvorrichtung aufgebaut wird, mit:
- einer Einrichtung zum Erhalten einer Untermenge von auswählbaren Strömen als eine Funktion des momentanen Stroms, wobei diese Untermenge zumindest einen Strom umfasst, der durch eine Einrichtung zur Übertragung von Auswahlbefehlen ausgewählt werden kann,
- einer Einrichtung zum Aufbauen, für jeden auswählbaren Strom, einer partiellen Verbindung des auswählbaren Stroms zwischen dem den auswählbaren Strom erzeugenden Quellendgerät und dem Zielendgerät, wobei die Verbindung **dadurch** partiell ist, dass die Aufbaueinrichtung den auswählbaren Strom nicht zu dem Zielendgerät durchlässt,
- einer Einrichtung zum Erfassen eines Auftretens eines vorbestimmten Ereignisses, und wobei, wenn sie ein Auftreten des vorbestimmten Ereignisses erfasst, die Erfassungseinrichtung die Aufbaueinrichtung deaktiviert, um einen der auswählbaren Ströme zu dem Zielendgerät durchzulassen, so dass eine Vollverbindung des Stroms zwischen dem den Strom erzeugenden Quellendgerät und dem Zielendgerät aufgebaut wird.

19. Zwischenvorrichtung nach Anspruch 18, wobei das vorbestimmte Ereignis der Empfang, durch die Zwischenvorrichtung, eines Befehls zum Auswählen eines auswählbaren Stroms ist.

20. Zwischenvorrichtung nach Anspruch 19, wobei, wenn die Erfassungseinrichtung den Befehl zum Auswählen eines Stroms empfängt, der als ausgewählter Strom bezeichnet wird:
• der ausgewählte Strom der neue momentane Strom wird,
• die Erfassungseinrichtung wieder die Einrichtung zum Erhalten einer Untermenge von auswählbaren Strömen und die Aufbaueinrichtung für jeden auswählbaren Strom im Hinblick auf einen neuen Empfang, durch die Empfangseinrichtung, des Befehls zum Auswählen eines Stroms aktiviert.

21. Zwischenvorrichtung gemäß zumindest einem der Ansprüche 18 bis 20, wobei die Untermenge von auswählbaren Strömen umfasst:
- zumindest einen vorangehenden Strom, der dem momentanen Strom gemäß einer bestimmten Stromklassifizierung vorangeht,
- zumindest einen nächsten Strom, der dem momentanen Strom gemäß der bestimmten Stromklassifizierung nachfolgt.

22. Zwischenvorrichtung gemäß zumindest einem der Ansprüche 18 bis 21, wobei das Netzwerk Knoten umfasst, die ein Basisnetzwerk bilden, mit dem Folgende verbunden sind:
- jedes durch einen Quellknoten, ein oder mehrere Unternetzwerke, mit dem oder denen die Quellendgeräte verbunden sind,
- durch einen Zielknoten, ein Unternetzwerk, mit dem das Zielendgerät verbunden ist
und wobei die Zwischenvorrichtung einer der Knoten ist.

23. Zwischenvorrichtung nach Anspruch 22, wobei die Zwischenvorrichtung der Zielknoten ist.

24. Zwischenvorrichtung gemäß zumindest einem der Ansprüche 18 bis 23, weiterhin mit einer Einrichtung zum Validieren des ausgewählten Stroms nach einem Aufbauen der Vollverbindung des ausgewählten Stroms.

25. Zwischenvorrichtung gemäß zumindest einem der Ansprüche 18 bis 24, weiterhin mit einer Einrichtung zum Freigeben von zumindest einer partiellen Verbindung, die aktiviert wird:
- nach irgendeiner Aktivierung der Einrichtung zum Bestimmen einer Untermenge von auswählbaren Strömen, und/oder
- nach irgendeiner Aktivierung der Einrichtung zum Validieren der Auswahl eines einzelnen Stroms, und/oder
- nach einer Deaktivierung der Zwischenvorrichtung.

26. Zwischenvorrichtung gemäß zumindest einem der Ansprüche 22 bis 25, wobei für jeden auswählbaren Strom die Einrichtung zum Aufbauen einer partiellen Verbindung des auswählbaren Stroms umfasst:
- eine Einrichtung zum Senden einer Stromverbindungsanforderung zu einem ersten bestimmten Quellknoten, wobei die Anforderung zumindest ein Kriterium zum Bestimmen des auswählbaren Stroms definiert,
- eine Einrichtung zum Empfangen einer Zurkenntnisnahmenachricht derart, dass:
- falls der erste Quellknoten bezüglich seines Unternetzwerks bestimmt, dass ein Quellendgerät zur Verfügung steht, das einen Strom erzeugt, der zumindest ein in der Anforderung definiertes Kriterium erfüllt, der erste Quellknoten eine positive Zurkenntnisnahmenachricht zu der Zwischenvorrichtung sendet, die die Einrichtung zum Aufbauen einer partiellen Verbindung aktiviert,
- falls dem nicht so ist, der erste Quellknoten eine negative Zurkenntnisnahmenachricht sendet und die Zwischenvorrichtung wieder die Einrichtung zum Senden einer Stromverbindungsanforderung und die Einrichtung zum Empfang einer Zurkenntnisnahme entweder mit dem ersten Knoten, wobei aber das zumindest eine Wahlkriterium modifiziert wird, oder mit einem zweiten Quellknoten aktiviert.

27. Zwischenvorrichtung gemäß zumindest einem der Ansprüche 25 bis 26, wobei die Einrichtung zum Freigeben der partiellen Verbindung umfasst:
- eine Einrichtung zum Senden einer Stromfreigabeanforderung zu dem Quellknoten, dessen zugehöriges Unternetzwerk mit dem Quellendgerät verbunden ist, das den freizugebenden Strom erzeugt, wobei die Freigabeanforderungsnachricht zumindest ein Wahlkriterium des freizugebenden Stroms definiert,
- eine Einrichtung zum Empfangen einer Zurkenntnisnahmenachricht derart, dass:
• falls der Quellknoten bestimmt, dass bezüglich seines Unternetzwerks ein Quellendgerät zur Verfügung steht, das einen Strom erzeugt, der das zumindest eine in der Freigabeanforderungsnachricht definierte Wahlkriterium erfüllt, der Quellknoten eine positive Zurkenntnisnahmenachricht zu der Zwischenvorrichtung sendet, die die Einrichtung zur Freigabe einer partiellen Verbindung aktiviert,
• falls dem nicht so ist, der Quellknoten eine negative Zurkenntnisnahmenachricht zu der Zwischenvorrichtung sendet und die Zwischenvorrichtung wieder die Einrichtung zum Senden einer Stromfreigabeanforderung und die Einrichtung zum Empfangen einer Zurkenntnisnahmenachricht entweder mit dem gleichen Quellknoten, wobei aber das zumindest eine Wahlkriterium modifiziert wird, oder mit einem zweiten Quellknoten aktiviert.

## Revendications

1. Procédé pour établir une connexion d'un flux de données parmi une pluralité de flux de données générés par une pluralité de terminaux sources, les terminaux sources et un terminal de destination étant connectés à un réseau de communications, ce procédé comprenant les étapes suivantes :
(a) une connexion complète est établie pour un flux courant, entre un des terminaux sources, qui est un terminal source courant, et le terminal de destination par le biais d'un dispositif intermédiaire ;
(b) un sous-ensemble de flux sélectionnables est déterminé (1001) en fonction du flux courant, ce sous-ensemble comprenant au moins un flux, ledit au moins un flux peut être sélectionné par des moyens d'émission de commandes de sélection ;
(c) pour chaque flux sélectionnable, une connexion partielle dudit flux sélectionnable est établie (1002) entre le terminal source générant ledit flux sélectionnable et le terminal de destination par le biais du dispositif intermédiaire, ladite connexion étant partielle en ce que le dispositif intermédiaire ne laisse pas passer ledit flux sélectionnable vers le terminal de destination ;
(d) à l'occurrence d'un événement prédéterminé, le dispositif intermédiaire laisse passer (1005) un desdits flux sélectionnables vers le terminal de destination, de sorte qu'une connexion complète dudit flux soit établie entre le terminal source générant ledit flux et le terminal de destination.

2. Procédé selon la revendication 1, dans lequel ledit événement prédéterminé est la réception (1003) par le dispositif intermédiaire d'une commande pour sélectionner un flux sélectionnable.

3. Procédé selon la revendication 2, dans lequel, à la réception d'une commande pour sélectionner un flux de données, dit flux sélectionné :
- le flux sélectionné devient le nouveau flux courant (1006, 1002) ;
- les étapes (b) et (c) sont réitérées avec le nouveau flux courant (1006, 1002), en vue d'une nouvelle itération de l'étape (d).

4. Procédé selon l'une quelconque des revendications 1 à 3, dans lequel le sous-ensemble de flux sélectionnables comprend :
- au moins un flux précédent qui précède le flux courant selon une classification de flux déterminée ;
- au moins un flux suivant qui suit le flux en cours selon la classification de flux déterminée.

5. Procédé selon l'une quelconque des revendications 1 à 4, dans lequel le réseau comprend des noeuds formant un réseau fédérateur (100, 101a à 101d) auquel ce qui suit est connecté :
- un ou plusieurs sous-réseaux auxquels les terminaux sources sont connectés, chacun étant connecté au réseau fédérateur par le biais d'un noeud source,
- un sous-réseau auquel le terminal de destination est connecté, ce sous-réseau étant connecté au réseau fédérateur par le biais d'un noeud de destination,
et dans lequel le dispositif intermédiaire est un desdits noeuds (103a à 103d).

6. Procédé selon la revendication 5, dans lequel le dispositif intermédiaire est le noeud de destination.

7. Procédé selon l'une quelconque des revendications 4 à 6, dans lequel le flux précédent est généré depuis un terminal source qui est connecté au même sous-réseau que le terminal source courant et dans lequel ledit flux précédent précède le flux courant selon une classification de flux déterminée propre audit sous-réseau.

8. Procédé selon l'une quelconque des revendications 4 à 6, dans lequel le flux précédent est généré depuis un terminal source qui est connecté à un sous-réseau précédent qui précède le sous-réseau auquel le terminal source courant est connecté, selon une classification de sous-réseaux déterminée, et dans lequel ledit flux précédent est le dernier flux selon une classification de flux déterminée propre audit sous-réseau précédent.

9. Procédé selon l'une quelconque des revendications 4 à 8, dans lequel le flux suivant est généré depuis un terminal source qui est connecté au même sous-réseau que le terminal source courant et dans lequel ledit flux suivant suit le flux courant selon une classification de flux déterminée propre audit sous-réseau.

10. Procédé selon l'une quelconque des revendications 4 à 8, dans lequel le flux suivant est généré depuis un terminal source qui est connecté à un sous-réseau suivant qui suit le sous-réseau auquel le terminal source courant est connecté selon une classification de sous-réseaux déterminée, et dans lequel ledit flux suivant est le premier flux selon une classification de flux déterminée propre audit sous-réseau suivant.

11. Procédé selon l'une quelconque des revendications 3 à 10, comprenant en outre une étape de validation du flux sélectionné, après que la connexion complète dudit flux sélectionné a été établie.

12. Procédé selon la revendication 11, dans lequel l'étape de validation du flux sélectionné est déclenchée par un événement appartenant au groupe comprenant :
- la réception par le dispositif intermédiaire d'une commande de validation spécifique audit flux sélectionné, dont l'émission résulte de l'utilisation desdits moyens d'émission de commandes ;
- l'expiration d'une temporisation préalablement déclenchée par une réception d'une commande de sélection spécifique à un flux particulier.

13. Procédé selon l'une quelconque des revendications 1 à 12, comprenant en outre une étape (1007) de libération d'au moins une connexion partielle, effectuée :
- suite à chaque itération de l'étape (b) de détermination d'un sous-ensemble de flux sélectionnables ; et/ou
- suite à chaque itération d'une étape de validation d'une sélection d'un flux particulier ; et/ou
- suite à une étape de désactivation du dispositif intermédiaire.

14. Procédé selon l'une quelconque des revendications 5 à 13, dans lequel, pour chaque flux sélectionnable, l'établissement d'une connexion partielle dudit flux sélectionnable comprend les étapes suivantes :
i. le dispositif intermédiaire envoie une demande de connexion de flux à un premier noeud source déterminé, ladite demande définissant au moins un critère pour déterminer ledit flux sélectionnable ;
ii. si, sur son sous-réseau, le premier noeud source détermine qu'est disponible un terminal source générant un flux satisfaisant audit au moins un critère défini dans la demande, le premier noeud source envoie un message d'accusé de réception positif au dispositif intermédiaire et la connexion partielle est établie ;
iii. si non, le premier noeud source envoie un message d'accusé de réception négatif et les étapes (i) à (iii) sont réitérées avec le premier noeud source mais en modifiant ledit au moins un critère de choix, ou avec un second noeud source.

15. Procédé selon la revendication 14, dans lequel ladite demande définit au moins les deux critères de choix suivants :
- un identifiant de flux (STR_ID) ;
- une information (DIR) de direction de recherche de flux dans une classification de flux propre au sous-réseau qui est connecté au réseau fédérateur par le biais du noeud source recevant la demande.

16. Procédé selon l'une quelconque des revendications 13 à 15, dans lequel, pour chaque connexion partielle d'un flux sélectionnable, la libération de ladite connexion partielle comprend les étapes suivantes :
(1) le dispositif intermédiaire envoie un message demandant une libération de flux au noeud source dont le sous-réseau associé est connecté au terminal source générant ledit flux devant être libéré, ledit message de demande de libération définissant au moins un critère de choix du flux devant être libéré ;
(2) si le noeud source détermine qu'est disponible, sur son sous-réseau, un terminal source générant un flux satisfaisant audit au moins un critère de choix défini dans le message de demande de libération, le noeud source envoie un message d'accusé de réception positif au dispositif intermédiaire et la connexion partielle est libérée ;
(3) si non, le noeud source envoie un message d'acquittement négatif au dispositif intermédiaire et les étapes (1) à (3) sont réitérées avec le même noeud source, mais en modifiant ledit au moins un critère de choix du flux devant être libéré, ou avec un second noeud source.

17. Programme informatique comprenant des instructions de code de programme pour l'exécution des étapes du procédé selon l'une quelconque des revendications 1 à 16, lorsque ledit programme est exécuté sur un ordinateur.

18. Dispositif intermédiaire utilisé dans la mise en oeuvre d'un procédé pour établir une connexion d'un flux de données parmi une pluralité de flux de données générés par une pluralité de terminaux sources, les terminaux sources et un terminal de destination étant connectés à un réseau de communications, une connexion complète d'un flux courant étant établie entre un des terminaux sources, qui est un terminal source courant, et le terminal de destination, par le biais du dispositif intermédiaire, dans lequel le dispositif intermédiaire comprend :
- des moyens pour obtenir un sous-ensemble de flux sélectionnables en fonction du flux courant, ce sous-ensemble comprenant au moins un flux capable d'être sélectionné par des moyens pour la transmission de commandes de sélection ;
- des moyens pour établir, pour chaque flux sélectionnable, une connexion partielle dudit flux sélectionnable entre le terminal source générant ledit flux sélectionnable et le terminal de destination, ladite connexion étant partielle car les moyens d'établissement ne laissent pas passer ledit flux sélectionnable vers le terminal de destination ;
- des moyens pour détecter une occurrence d'un événement prédéterminé,
et dans lequel, lorsqu'ils détectent une occurrence dudit événement prédéterminé, les moyens de détection désactivent les moyens d'établissement pour laisser passer un desdits flux sélectionnables vers le terminal de destination, de sorte qu'une connexion complète dudit flux soit établie entre le terminal source générant ledit flux et le terminal de destination.

19. Dispositif intermédiaire selon la revendication 18, dans lequel ledit événement prédéterminé est la réception par le dispositif intermédiaire d'une commande pour sélectionner un flux sélectionnable.

20. Dispositif intermédiaire selon la revendication 19, dans lequel, lorsque les moyens de détection reçoivent la commande pour sélectionner un flux, dit flux sélectionné :
- le flux sélectionné devient le nouveau flux courant ;
- les moyens de détection activent à nouveau lesdits moyens pour obtenir un sous-ensemble de flux sélectionnables et lesdits moyens d'établissement, pour chaque flux sélectionnable, en vue d'une nouvelle réception par lesdits moyens de réception de ladite commande pour sélectionner un flux.

21. Dispositif intermédiaire selon l'une quelconque des revendications 18 à 20, dans lequel le sous-ensemble de flux sélectionnables comprend :
- au moins un flux précédent qui précède le flux courant selon une classification de flux déterminée ;
- au moins un flux suivant qui suit le flux courant selon la classification de flux déterminée.

22. Dispositif intermédiaire selon l'une quelconque des revendications 18 à 21, dans lequel le réseau comprend des noeuds formant un réseau federateur auquel ce qui suit est connecté :
- chacun par le biais d'un noeud source, un ou plusieurs sous-réseaux auxquels les terminaux sources sont connectés ;
- par le biais d'un noeud de destination, un sous-réseau auquel le terminal de destination est connecté,
et dans lequel le dispositif intermédiaire est un desdits noeuds.

23. Dispositif intermédiaire selon la revendication 22, dans lequel le dispositif intermédiaire est le noeud de destination.

24. Dispositif intermédiaire selon l'une quelconque des revendications 18 à 23, comprenant en outre des moyens pour valider le flux sélectionné, après que la connexion complète dudit flux sélectionné a été établie.

25. Dispositif intermédiaire selon l'une quelconque des revendications 18 à 24, comprenant en outre des moyens pour libérer au moins une connexion partielle, activée :
- postérieurement à toute activation des moyens pour déterminer un sous-ensemble de flux sélectionnables ; et/ou
- postérieurement à toute activation des moyens pour valider la sélection d'un flux particulier ; et/ou
- postérieurement à une désactivation du dispositif intermédiaire.

26. Dispositif intermédiaire selon l'une quelconque des revendications 22 à 25, dans lequel, pour chaque flux sélectionnable, les moyens pour établir une connexion partielle dudit flux sélectionnable comprennent :
- des moyens pour envoyer une demande de connexion de flux à un premier noeud source déterminé, ladite demande définissant au moins un critère pour déterminer ledit flux sélectionnable ;
- des moyens pour recevoir un message d'accusé de réception de sorte que :
- si, sur son sous-réseau, le premier noeud source détermine qu'est disponible un terminal source générant un flux satisfaisant audit au moins un critère défini dans la demande, le premier noeud source envoie un message d'accusé de réception positif au dispositif intermédiaire qui active les moyens pour établir une connexion partielle ;
- si non, le premier noeud source envoie un message d'accusé de réception négatif et le dispositif intermédiaire active à nouveau les moyens pour envoyer une demande de connexion de flux et les moyens pour la réception d'un accusé de réception, soit avec le premier noeud source mais en modifiant ledit au moins un critère de choix, soit avec un second noeud source.

27. Dispositif intermédiaire selon l'une quelconque des revendications 25 à 26, dans lequel lesdits moyens pour libérer ladite connexion partielle comprennent :
- des moyens pour envoyer une demande de libération de flux au noeud source dont le sous-réseau associé est connecté au terminal source générant le flux devant être libéré, ledit message de demande de libération définissant au moins un critère de choix du flux devant être libéré ;
- des moyens pour recevoir un message d'accusé de réception de sorte que :
- si le noeud source détermine qu'est disponible, sur son sous-réseau, un terminal source générant un flux satisfaisant audit au moins un critère de choix défini dans le message de demande de libération, le noeud source envoie un message d'accusé de réception positif au dispositif intermédiaire qui active les moyens de libération de connexion partielle ;
- si non, le noeud source envoie un message d'accusé de réception négatif au dispositif intermédiaire et le dispositif intermédiaire active à nouveau les moyens pour envoyer une demande de libération de flux et les moyens pour recevoir un message d'accusé de réception, soit avec le même noeud source mais en modifiant ledit au moins un critère de choix, soit avec un second noeud source.
